# FASCICULE DE BREVET EUROPEEN

(11) **EP 3 901 692 B1**
(45) Date de publication et mention de la délivrance du brevet: **03.09.2025**
(21) Numéro de dépôt: 21171240.1
(22) Date de dépôt: 08.07.2014
(51) Int. Cl.: G02C 7/06, B29D 11/00, B24B 9/14, G02C 13/00, B33Y 80/00

(54) **PROCEDE DE FABRICATION D'AU MOINS UNE LENTILLE OPHTALMIQUE**
VERFAHREN ZUR HERSTELLUNG MINDESTENS EINES BRILLENGLASES
METHOD FOR MANUFACTURING AT LEAST ONE OPHTHALMIC LENS

(30) Priorité: 08.07.2013 FR 1356715
(43) Date de publication de la demande: 27.10.2021
(62) Demande divisionnaire de: 14749917.2
(73) Titulaire: ESSILOR INTERNATIONAL, 94220 Charenton-Le-Pont (FR)
(72) Inventeur: QUERE, Loïc, 94210 LA VARENNE SAINT-HILAIRE (FR); GOURAUD, Alexandre, 94120 FONTENAY-SOUS-BOIS (FR); ALLIONE, Pascal, 94130 NOGENT-SUR-MARNE (FR); BEGON, Cédric, 94300 VINCENNES (FR)
(74) Mandataire: Santarelli

(56) Documents cités:
- EP-A1- 1 918 760
- EP-A1- 1 950 601
- EP-A1- 2 474 404
- WO-A2-2006/029268
- DE-A1- 102009 004 377
- US-A1- 2011 013 136
- US-B1- 7 036 929

## Description

### DOMAINE DE L'INVENTION

L'invention concerne le domaine de la fabrication des lentilles ophtalmiques présentant au moins une fonction optique, par exemple des lentilles ophtalmiques progressives.

L'invention concerne plus particulièrement un procédé de fabrication de telles lentilles ophtalmiques.

L'invention concerne également une machine de fabrication de telles lentilles ophtalmiques.

### ARRIERE PLAN TECHNOLOGIE

On sait que les lentilles ophtalmiques sont soumises à différentes étapes de fabrication afin de leur apporter les propriétés ophtalmiques prescrites (aussi appelées fonction optique).

On connaît des procédés de fabrication de lentilles ophtalmiques qui comportent une étape de fourniture d'un palet brut ou semi-fini, c'est-à-dire un palet n'ayant aucune ou ayant une seule face dite finie (autrement dit une face qui définit une surface optique simple ou complexe).

Ces procédés comportent ensuite une ou plusieurs étapes d'usinage d'au moins une face du palet dite brute, pour obtenir une face dite finie, définissant la surface optique recherchée pour fournir les propriétés ophtalmiques (complexes ou non) prescrites au porteur de la lentille ophtalmique.

On entend par une ou plusieurs étapes d'usinage les étapes dites d'ébauche, de finition et de polissage (usinage par surfaçage).

La fonction optique d'une lentille ophtalmique est apportée principalement par deux dioptres correspondant aux faces avant et arrière de la lentille ophtalmique. La topographie de la surface à réaliser dépend de la répartition de la fonction appliquée entre les faces avant et arrière de la lentille.

L'étape d'ébauche permet, partant d'un palet brut ou semi-fini, de lui donner l'épaisseur et les rayons de courbure de la surface sur la ou les faces dites non finies du palet, tandis que l'étape de finition (appelée aussi doucissage) consiste à affiner le grain voire la précision des rayons de courbure des faces obtenues précédemment et permet de préparer (doucir) la ou les surfaces courbes générées pour l'étape de polissage. Cette étape de polissage est une étape de surfaçage de la ou des surfaces courbes doucies ou ébauchées, et permet de rendre la lentille ophtalmique transparente. Les étapes d'ébauche et de finition sont des étapes qui imposent l'épaisseur de la lentille finale et les rayons de courbures de la surface traitée indépendamment de l'épaisseur de l'objet initiale et de ses rayons de courbures initiaux.

On notera qu'une technologie de fabrication de surfaces optiques complexes, appelée "free form surfacing" ou "digital surfacing" en anglais, implique un usinage particulièrement précis, une telle surface combinant par exemple un tore et une progression. L'usinage d'une telle surface optique complexe est réalisé à l'aide d'au moins une machine d'usinage de très haute précision au moins pour l'étape d'ébauche, voire pour l'étape de finition et de polissage, et/ou d'un polissoir capable de polir la ou les surfaces issues des étapes précédentes, sans déformer la lentille ophtalmique.

Le document WO2006/029268A2 divulge la fabrication additive (impression 3D) d'un élément complémentaire optique sur une ébauche de verre de lunettes.

### OBJET DE L'INVENTION

L'invention vise à fournir un procédé de fabrication d'une lentille ophtalmique présentant au moins une fonction optique, qui soit particulièrement simple, commode et économique à mettre en œuvre, et qui soit capable également de fournir de façon rapide et flexible des lentilles ayant des géométries, des propriétés ophtalmiques et des caractéristiques matériaux très diverses, répondant à une logique de personnalisation de masse.

L'invention a ainsi pour objet un procédé de fabrication d'au moins une lentille ophtalmique et une machine de fabrication additive configurée pour fabriquer une telle lentille ophtalmique, tels que définis dans les revendications.

De manière utile à la compréhension de l'invention, il est décrit dans le présent mémoire un procédé de fabrication d'au moins une lentille ophtalmique présentant au moins une fonction optique, caractérisé en ce qu'il comporte :
- l'étape de fournir un système optique de départ de ladite au moins une lentille ophtalmique, présentant une fonction optique de base apportée par une face avant et une face arrière dudit système optique de départ ; et
- l'étape de fabriquer de manière additive un élément optique complémentaire de ladite au moins une lentille ophtalmique, par le dépôt d'une pluralité d'éléments de volume prédéterminés d'au moins un matériau ayant un indice de réfraction prédéterminé, directement sur au moins l'une desdites face avant et face arrière dudit système optique de départ ;
   avec ladite étape de fabriquer de manière additive qui comporte l'étape de déterminer une consigne de fabrication dudit élément optique complémentaire à partir de caractéristiques de ladite au moins une fonction optique à fournir à ladite au moins une lentille ophtalmique, de caractéristiques de ladite au moins une fonction optique de base dudit système optique de départ, de caractéristiques géométriques dudit système optique de départ et dudit indice de réfraction prédéterminé dudit au moins un matériau.

Le procédé selon l'invention permet ainsi d'obtenir une lentille ophtalmique formée d'un système optique de départ, aussi appelé lentille de base, et d'un élément optique complémentaire, aussi appelée surépaisseur optique, directement fabriqué de manière additive sur le système optique de départ. Le terme « directement » signifie qu'il n'y a pas de pièce intermédiaire (comme par exemple un support de fabrication d'une machine de fabrication additive) entre le système optique de départ et l'élément optique complémentaire, ni au cours de sa fabrication ni une fois la lentille ophtalmique fabriquée. On notera qu'un traitement prédéterminé peut être effectué sur la ou les faces du système optique de départ sur lesquelles une surépaisseur peut être fabriquée, ce traitement étant configuré pour faciliter l'accroche du matériau formant l'élément optique complémentaire, sans toutefois qu'il s'agisse d'une pièce intermédiaire. Ce traitement peut être un ou plusieurs traitements parmi des traitements d'activation de surface physique ou chimique, tels que par exemple, corona, plasma, solution alcoolique ou sodique, source actinique. De même, le système optique de départ peut comprendre une couche d'accroche et/ou peut comprendre au moins une couche permettant de réaliser une adaptation d'impédance optique entre le système otique de départ et l'élément optique complémentaire lorsque ceux-ci ont des indices de réfraction différents.

On notera que par lentille ophtalmique on entend ici une lentille optique de qualité ophtalmique destinée à être montée sur une monture d'une paire de lunettes. Ce peut être une lentille ophtalmique à la forme de la monture ou nécessitant encore une étape de détourage, ou encore solidaire de la monture. Ce peut ainsi être une lentille unifocale, bifocale, multifocale, ou progressive, ou encore un verre ophtalmique unique destiné à être en regard de l'œil droit et de l'œil gauche, de tels verres ophtalmiques étant connus notamment sous la dénomination masque ou visière.

La face (avant ou arrière) du système optique de départ sur laquelle l'élément optique complémentaire est directement fabriqué est au moins partiellement incurvée et présente par conséquent une courbure ou des rayons de courbure sur sa surface.

On notera que le système optique de départ peut comprendre une monture apte à recevoir deux verres ophtalmiques distincts, chacun étant destinés à être en regard de l'œil droit et de l'œil gauche, ou une monture apte à recevoir un verre ophtalmique unique destiné à être en regard de l'œil droit et de l'œil gauche (masque ou visière).On notera que dans le cadre de l'invention, le système optique comprenant au moins une monture et au moins un verre ophtalmique peut être fabriqué de façon séparée ou de façon solidaire.

On notera que cet élément optique complémentaire peut comporter par exemple une surépaisseur fabriquée sur une des faces avant ou arrière du système optique de départ, ou bien une surépaisseur fabriquée sur la face avant et une surépaisseur fabriquée sur la face arrière du système optique de départ.

On notera que puisque la lentille ophtalmique est le résultat de la combinaison du système optique de départ et de l'élément optique complémentaire, les propriétés inhérentes à ce système et à cet élément se retrouvent dans la lentille ophtalmique. Ainsi, il est par exemple particulièrement avantageux de choisir un système optique de départ ayant des propriétés prédéterminées pour les apporter à la lentille. **Il** peut par exemple s'agir d'un système optique de départ ayant une rigidité prédéterminée et/ou formé d'un matériau possédant des propriétés élevées de tenue en température.

Grâce au procédé selon l'invention, il n'est pas nécessaire de fabriquer l'intégralité de la lentille ophtalmique par fabrication additive. Ce procédé permet ainsi, grâce à l'utilisation du système optique de départ fabriqué de préférence selon des techniques classiques (par exemple moulage et éventuellement usinage), d'optimiser la quantité de matériau utilisée en fabrication additive pour obtenir la lentille ophtalmique. En outre, les matériaux formant le système optique de départ et l'élément optique complémentaire peuvent être choisis avec des indices de réfraction respectifs différents de sorte à optimiser (réduire) l'épaisseur de l'élément optique complémentaire et ainsi optimiser encore la quantité de matériau utilisée en fabrication additive pour obtenir la lentille ophtalmique. En outre, il est ainsi possible de mettre à jour la prescription d'un porteur tout en lui permettant de conserver la ou les autres fonctions de son système optique de départ par exemple des traitements particuliers tels que des traitements photochromiques ou un filtre polarisé ou, dans le cas de verres actifs de pouvoir conserver les réglages et/ou le système actif.

Le procédé de fabrication selon l'invention permet donc d'obtenir une lentille ophtalmique présentant une fonction optique issue de la combinaison d'une fonction optique de base (nulle ou non nulle) du système optique de départ et d'une fonction optique complémentaire (non nulle, simple ou complexe, et potentiellement additionnelle) de l'élément optique complémentaire.

Il est possible de définir une fonction optique simple comme étant la fonction optique obtenue à partir de surfaces sphériques ou toriques.

A contrario, il est possible de définir une fonction optique complexe comme étant la fonction optique obtenue à partir d'au moins une surface non simple, c'est-à-dire par exemple d'une surface asphérique, atorique, comportant une fonction associée à la monturisation, ou encore au débasage (« freecurve » en terminologie anglo-saxonne).

De plus, il est possible de définir une fonction optique additionnelle comme étant une fonction optique qui présente une variation de puissance continue ou non, selon la position sur le verre, et/ou selon le temps. Ce peut être par exemple une fonction optique progressive ou multifocale, telle que bifocale ou trifocale, ou à puissance commandée au cours du temps, comme par exemple ce peut être le cas pour une lentille fluidique ou une lentille comportant une fonction active ou une lentille informative.

On notera que c'est l'élément optique complémentaire qui permet d'obtenir la fonction optique désirée pour la lentille ophtalmique à partir du système optique de départ, même si le système optique de départ présente déjà une fonction optique. Autrement dit, sans cet élément optique complémentaire, la lentille ophtalmique ne peut présenter la fonction optique qui lui est prescrite. Cet élément optique complémentaire n'a donc rien à voir avec un simple revêtement de surface, tel qu'une couche de revêtement antireflet, de revêtement antibuée, de revêtement anti-rayures ou encore de revêtement anti-salissures.

Il est à noter que dans le cadre de la présente invention, qui se situe dans le domaine de l'ophtalmique, la fonction optique à fournir à la lentille ophtalmique permet de corriger des aberrations, c'est-à-dire des défauts d'un système optique, à savoir l'œil du porteur de la lentille ophtalmique, qui sont ici uniquement d'ordre dit inférieur. En d'autres termes, la fonction optique à fournir à la lentille ophtalmique doit permettre au moins de corriger des aberrations d'ordre inférieur et ne se limite pas à permettre de corriger des aberrations d'ordre dit supérieur.

En pratique, dans le domaine de l'ophtalmique, les propriétés ophtalmiques prescrites au porteur de la lentille ophtalmique, qui définissent la fonction optique à fournir à cette lentille, sont généralement exprimées en dioptries (D) et sont quantifiées par incrémentation de 0,25 D.

On notera que lors de la fabrication de telles lentilles ophtalmiques, il est généralement admis des tolérances de fabrication de l'ordre de 0,06 D à 0,12 D. Ainsi, dans le domaine de l'ophtalmique, la puissance à apporter est au moins supérieure à 0,06 D, de préférence supérieure à 0,12 D, par exemple comprise dans l'intervalle [0,12 D ; 12 D], et de préférence dans l'intervalle [0,25 D ; 5 D].

On notera par ailleurs que la puissance optique, ou la puissance porteur, ainsi obtenue une fois la fonction optique fournie à la lentille ophtalmique, se calcule à partir de mesures prises généralement conformément à la norme ISO_10322-2(F) au moyen d'un frontofocomètre, soit avec une pupille d'analyse du frontofocomètre d'au moins environ 3 à 5 mm.

Les techniques de fabrication additive sont particulièrement pertinentes pour répondre à l'objectif de l'invention.

Par fabrication additive on entend selon la norme internationale ASTM 2792-12, des techniques de fabrication comprenant un procédé pour joindre des matériaux afin de fabriquer des objets à partir de données de modélisation 3D (typiquement un fichier de conception assistée par ordinateur, ci-après CAO) représentant usuellement une conception en couche par couche, en opposition aux méthodologies de fabrication soustractive, telle que l'usinage traditionnel.

La fabrication additive correspond ici, par exemple, à un procédé d'impression tridimensionnelle mettant en œuvre par exemple un jet de matière polymère (« inkjet printing » en terminologie anglo-saxonne), ou un procédé de stéréolithographie, voire de stéréolithographie par projection de masque, ou encore un procédé de frittage ou de fusion sélective par laser (« Selective Laser Melting », ci-après SLM, ou « Selective Laser Sintering », ci-après SLS en terminologie anglo-saxonne), ou encore un procédé d'extrusion par fil thermoplastique.

Les technologies de fabrication additives consistent à fabriquer des objets en juxtaposant des éléments de matières en accord avec un agencement prédéfini sous forme numérique dans un fichier de CAO. La matière constitutive des éléments de volume dans la fabrication additive peut être solide, liquide ou sous forme de gel, bien qu'il soit d'usage que la matière soit essentiellement solide à la fin du procédé de fabrication additive.

Ces éléments de volume élémentaires dénommés « voxels » peuvent être crées et juxtaposés selon une variété de principes techniques différents, par exemple, par dépose de gouttes de monomères photopolymérisables au moyen d'une buse d'impression, par photopolymérisation sélective avec une source de rayons ultraviolets la surface d'un bain de monomère (technique de stéréolithographie), ou par fusion de poudre polymère (SLM).

On observera que le système optique de départ forme en tant que tel un support de fabrication pour l'élément optique complémentaire. Ici, le support de fabrication n'appartient donc pas à la machine de fabrication additive, laquelle comporte un support de réception destiné à recevoir le système optique de départ. Ainsi, le support de fabrication (système optique de départ) est distinct du support de réception, lequel n'est pas destiné à faire partie de la lentille ophtalmique.

Le procédé de fabrication selon l'invention est donc particulièrement simple, commode et économique, surtout dans un contexte où la diversité des fonctions optiques à réaliser est importante (du fait de la personnalisation de ces fonctions optiques), nécessitant des procédés de fabrication rapides et flexibles.

On notera également que l'on entend par fonction optique d'une lentille, d'un système ou d'un élément optique, la réponse optique de cette lentille, de ce système ou de cet élément, c'est-à-dire une fonction définissant toute modification de propagation et de transmission d'un faisceau optique à travers la lentille, le système ou l'élément optique concerné, pour toute incidence du faisceau optique entrant et sur toute l'étendue géométrique d'un dioptre d'entrée illuminée par le faisceau optique incident.

Plus précisément, dans le domaine ophtalmique, la fonction optique est définie comme la répartition des caractéristiques de puissance porteur, d'astigmatisme, des déviations prismatiques associées à la lentille, au système ou à l'élément optique pour l'ensemble des directions du regard d'un porteur de cette lentille, de ce système ou de cet élément. Cela suppose bien entendu la prédétermination du positionnement géométrique de la lentille, du système ou de l'élément optique par rapport à l'œil du porteur.

Selon des caractéristiques préférées, simples, commodes et économiques du procédé :
- ladite étape de fabriquer de manière additive comporte l'étape de déterminer des caractéristiques géométriques dudit élément optique complémentaire et/ou de ladite au moins une lentille ophtalmique à partir de caractéristiques d'au moins une fonction optique complémentaire à fournir audit élément optique complémentaire, desdites caractéristiques géométriques dudit système optique de départ et dudit indice de réfraction prédéterminé dudit au moins un matériau ;
- ladite étape de fabriquer de manière additive comporte l'étape de déterminer au moins une fonction optique complémentaire à fournir audit élément optique complémentaire à partir desdites caractéristiques de ladite au moins une fonction optique à fournir à ladite au moins une lentille ophtalmique et desdites caractéristiques de ladite au moins une fonction optique de base dudit système optique de départ ;

- ladite étape de fabriquer de manière additive comporte l'étape de déterminer ladite au moins une fonction optique à apporter à ladite au moins une lentille ophtalmique à partir de valeurs de prescription liées à un porteur de ladite au moins une lentille ophtalmique et de données complémentaires de port d'une monture prédéterminée et/ou de personnalisation et/ou de forme de la monture ;
- ladite étape de fabriquer de manière additive comporte l'étape de mesurer lesdites caractéristiques de ladite au moins une fonction optique de base dudit système optique de départ et/ou l'étape de mesurer lesdites caractéristiques géométriques dudit système optique de départ ;
- ledit au moins un matériau dans lequel est fabriqué de manière additive ledit élément optique complémentaire est différent du matériau constitutif dudit système optique de départ ;
- ledit système optique de départ est formé par un ensemble comportant une monture et deux lentilles ophtalmiques initiales montées sur la dite monture, et ledit procédé comporte une étape de fabrication additive de deux dits éléments optiques complémentaires respectivement sur lesdites lentilles ophtalmique initiales utilisées comme système optique de départ pour former deux dites lentilles ophtalmiques, avec ladite consigne de fabrication qui est déterminée en outre à partir de caractéristiques liées à la vision binoculaire d'un porteur des deux dites lentilles ophtalmiques ;
- ladite étape de fabriquer de manière additive met de préférence en œuvre un procédé d'impression tridimensionnelle, ou de stéréolithographie, ou de stéréolithographie par projection de masque, voire de de frittage ou de fusion sélective par laser, ou d'extrusion par fil thermoplastique ;
- ladite étape de fabriquer de manière additive est réalisée par le dépôt d'une pluralité d'au moins un élément de volume prédéterminé dudit au moins un matériau sur au moins toute la surface utile de l'une au moins desdites face avant et face arrière dudit système optique de départ ;
- le procédé comporte, avant ladite étape de fabrication additive, l'étape d'introduire et de positionner ledit système optique de départ sur un support de réception dans une machine de fabrication additive ;
- le procédé comporte, après ladite étape de positionnement dudit système optique de départ et avant ladite étape de fabrication additive, l'étape de vérifier la position dudit système optique de départ dans ladite machine de fabrication additive et l'étape de déclencher une action correctrice s'il existe un écart entre la position réelle dudit système optique de départ et une position prédéterminée ;
- après ladite étape de fabrication additive, ledit élément optique complémentaire et/ou ledit système optique de départ présentent un contour sensiblement égal à un contour configuré pour être introduit dans une monture prédéterminée ;
- le procédé comporte, après l'étape de fabrication additive, l'étape d'irradier ladite lentille ophtalmique ; et/ou
- le procédé comporte l'étape de traiter et/ou de vernir au moins une face de ladite lentille ophtalmique.

De manière utile à la compréhension de l'invention, il est en outre décrit dans le présent mémoire une machine de fabrication additive configurée pour fabriquer une lentille ophtalmique et comportant une unité de contrôle et de commande pourvue d'éléments systémiques configurés pour exécuter un programme d'ordinateur comportant des instructions configurées pour mettre en œuvre chacune des étapes du procédé de fabrication décrit ci-dessus.

Selon des caractéristiques préférées, simples, commodes et économiques de la machine :
- la machine comporte un support de réception configuré pour recevoir ledit système optique de départ, avec ledit support de réception et/ou ledit système optique de départ qui sont configurés pour que ce dernier soit positionné dans une position prédéterminée par rapport à un repère de ladite machine ; et/ou
- la machine comporte un système de détection, formé par exemple par un dispositif de lecture optique et/ou un dispositif de capture d'images, configuré pour détecter la position dudit système optique de départ sur ledit support de réception et/ou par rapport à ladite position prédéterminée dans ledit repère de ladite machine.

### BREVE DESCRIPTION DES DESSINS

On va maintenant poursuivre l'exposé de l'invention par la description d'un exemple de réalisation, donnée ci-après à titre illustratif et non limitatif, en référence aux dessins annexés sur lesquels :
- la figure 1 représente schématiquement une machine de fabrication additive configurée pour réaliser au moins un élément optique complémentaire directement sur un système optique de départ pour obtenir au moins une lentille ophtalmique ;
- la figure 2 représente schématiquement un système optique de départ et une lentille ophtalmique comportant ce système optique de départ et obtenue au moins partiellement à l'aide de la machine illustrée sur la figure 1 ;
- les figures 3 à 5 sont des vues similaires à celle de la figure 2, illustrant différentes variantes de réalisation de lentilles ophtalmiques ;
- la figure 6 est un schéma-blocs illustrant différentes étapes de fonctionnement d'un procédé de fabrication d'une lentille ophtalmique ; et
- la figure 7 est un schéma-blocs illustrant d'autres étapes de fonctionnement du procédé de fabrication d'au moins une lentille ophtalmique.

### DESCRIPTION DETAILLEE D'UN EXEMPLE DE REALISATION

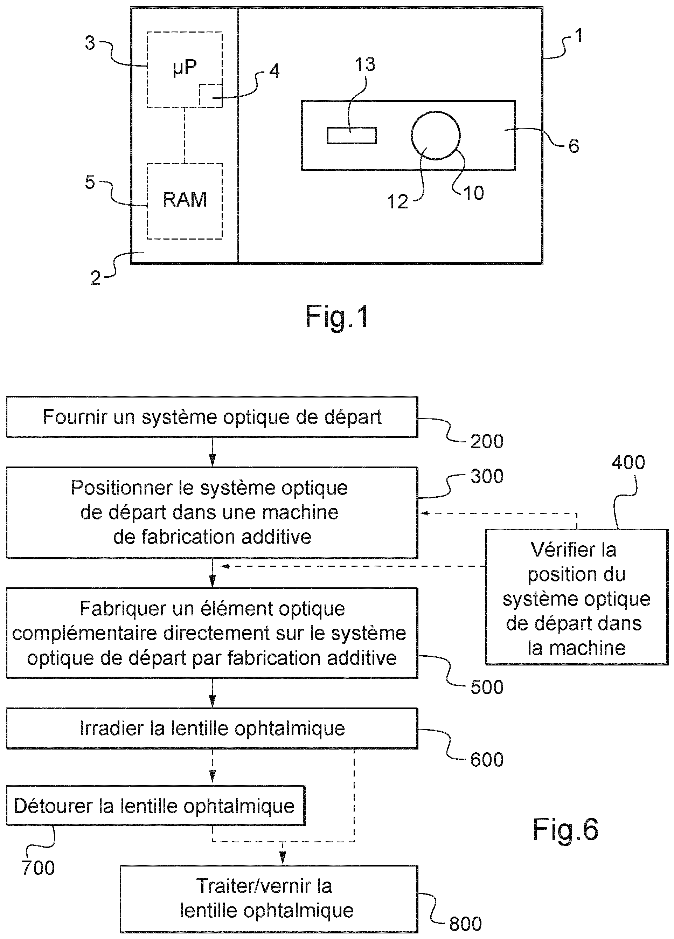

La figure 1 illustre une machine de fabrication additive 1 d'une lentille ophtalmique 12, ici une machine d'impression tridimensionnelle à commande numérique.

La commande numérique désigne l'ensemble des matériels de la machine de fabrication additive 1 configuré pour donner des instructions de mouvement à tous les organes que comporte cette machine.

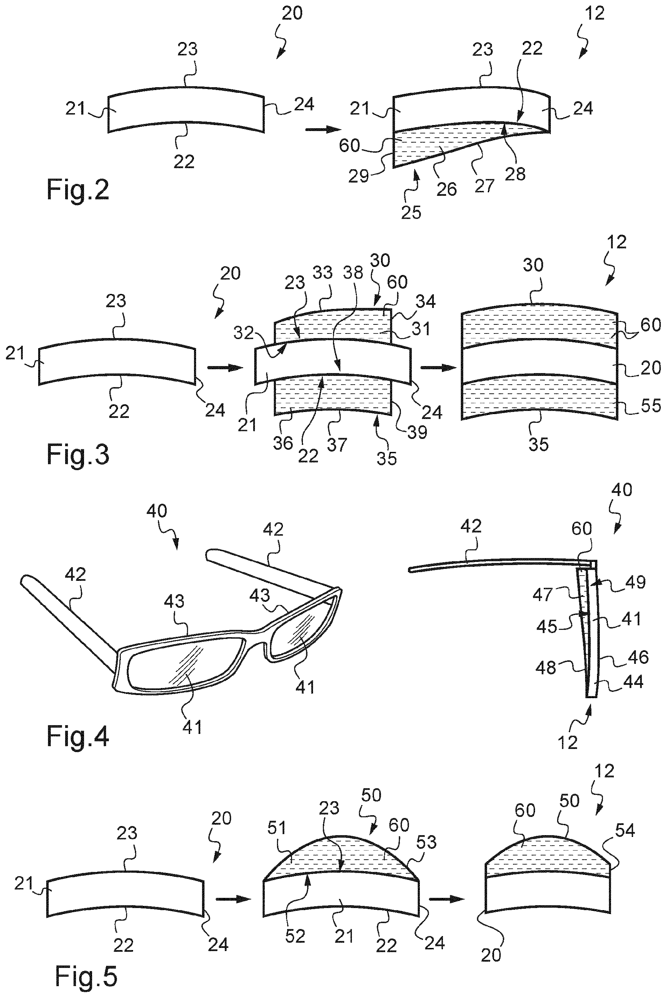

La machine de fabrication additive 1 est ici configurée pour déposer, par juxtaposition, une pluralité d'éléments de volume prédéterminés formant des couches superposées (autrement dit en couche par couche), d'au moins un matériau, directement sur un système optique de départ 20 et 41 (figures 2 à 5) positionné sur un support de réception 10 de la machine 1 pour former un élément optique complémentaire 25, 30, 35 et 47 (figures 2 à 5) et ainsi obtenir la lentille ophtalmique 12.

Cette lentille ophtalmique 12 est par exemple progressive et possède en outre des composantes torique et prismatique.

Chaque élément de volume prédéterminé est défini par une composition prédéterminée, une position prédéterminée dans l'espace et des dimensions prédéterminées à un instant t.

Comme il s'agit ici de fabrication additive et par exemple d'impression tridimensionnelle, on parle également d'élément volumétrique, ou d'élément de volume, appelé aussi voxel (représentatif d'un pixel en trois dimensions).

L'élément optique complémentaire 25, 30, 35 et 47 et le système optique de départ 20, 41 sont configurés pour former la lentille ophtalmique 12. Il s'agit donc d'un élément et d'un système possédant au moins une fonction optique, dit aussi « ophtalmique » dans certains cas, par exemple progressif pouvant posséder en outre des composantes toriques et prismatiques. Contrairement à l'élément optique complémentaire 25, 30, 35 et 47 qui présente selon l'invention une fonction optique complémentaire non nulle, le système optique de départ 20, 41 peut comporter une fonction optique nulle ou non nulle.

Ainsi, le système optique de départ peut comporter une fonction optique simple ou complexe, voir même comporter des éléments d'optique active tels qu'un guide d'onde, un guide d'image et/ou des éléments optiques pixélisés comprenant des cellules jointes ou séparées par des murs et comportant une composition électroactive ou photoactive.

Le système optique de départ 20, 41 est porté par le support de réception 10 tandis que l'élément optique complémentaire 25, 30, 35 et 47 est fabriqué directement sur le système optique de départ 20, 41, ce système et cet élément étant configurés pour être solidaires et ainsi former une lentille ophtalmique 12 d'un seul tenant, tandis que cette dernière est configurée pour être séparée du support de réception 10.

On notera que ce support de réception 10 est un support prédéterminé de la machine de fabrication additive 1 et donc que ses caractéristiques géométriques sont connues et regroupées dans un fichier qui est stocké ou chargé dans une première unité de contrôle et de commande 2 de la machine de fabrication additive 1.

Le support de réception 10 de la machine de fabrication additive 1 comporte un corps pourvu d'une surface de réception qui présente une géométrie globale indépendante ou dépendante, pour tout ou partie, de la géométrie d'au moins une surface du système optique de départ et par conséquent de la lentille ophtalmique 12 à réaliser.

Le support de réception 10 peut être amovible ou fixe dans la machine 1, voire il peut être à même de s'adapter à une autre machine utilisée en complément de la machine de fabrication additive, par exemple une machine de détourage et/ou une machine de traitement et/ou de vernissage.

On notera que le support de réception 10 et/ou le système optique de départ 20, 41 sont configurés pour que ce dernier soit positionné dans une position prédéterminée sur le support de réception 10 et par rapport à un repère de la machine 1.

Ici, le support de réception 10 est par exemple pourvu d'une pluralité de pattes de positionnement (non représentées), en particulier au moins trois.

En outre, la machine 1 comporte ici un système de détection formé par exemple par un dispositif de lecture optique (non représenté) configuré pour détecter par exemple un axe optique du système optique de départ.

En variante, la machine 1 comporte un système de détection formé par exemple par un dispositif de lecture optique et/ou un dispositif de capture d'images (non représentés), configurés pour détecter la position du système optique de départ sur le support de réception 10 et/ou par rapport à la position prédéterminée dans le repère de ladite machine 1.

L'ensemble des matériels et logiciels de la machine de fabrication additive 1 est en outre configuré pour donner des instructions de mouvement, de manipulation et de contrôle de matériaux et de dispositifs de polymérisation que comporte cette machine 1.

La machine de fabrication additive 1 comporte une buse ou une rampe de buses 13 ainsi que l'unité de contrôle et de commande 2, laquelle est pourvue d'un système de traitement de données comportant un microprocesseur 3 muni d'une mémoire 4, notamment non volatile, lui permettant de charger et stocker un logiciel, autrement dit un programme d'ordinateur qui, lorsqu'il est exécuté dans le microprocesseur 3, permet la mise en œuvre d'un procédé de fabrication additive. Cette mémoire non volatile 4 est par exemple de type ROM (« *Read-Only Memory »* en anglais).

L'unité 2 comporte en outre une mémoire 5, notamment volatile, permettant de mémoriser des données durant l'exécution du logiciel et la mise en œuvre du procédé de fabrication additive.

Cette mémoire volatile 5 est par exemple de type RAM ou EEPROM (respectivement « *Random Access Memory »* et *« Electrically Erasable Programmable Read-Only Memory »* en anglais).

La machine de fabrication additive 1 comporte de plus une ouverture 6, ici vitrée, configurée pour accéder à la lentille ophtalmique 12 fabriquée partiellement de manière additive par cette machine 1 directement sur son système optique de départ 20, 41, lequel est porté par le support de réception 10 de cette dernière.

On notera que pour fabriquer de manière additive l'élément optique complémentaire 25, 30, 35, 47 et 50, on a besoin de connaître précisément certains paramètres de fabrication additive, tels que la vitesse d'avance de la ou des buses 13, l'énergie et la source d'énergie mises en œuvre, ici une source émettant dans l'ultra-violet pour la machine d'impression tridimensionnelle mais il pourrait s'agir d'un laser dans le cas d'une machine de stéréolithographie ou encore d'une énergie de chauffe dans le cas d'un dépôt à fil tendu appelé aussi extrusion par fil thermoplastique.

On a aussi besoin de connaître précisément le ou les matériaux utilisés et leur état, ici sous forme de composition polymérisable, ou de fil, gouttes, ou poudre de polymère thermoplastique.

On a aussi besoin de connaître précisément la ou les fonctions optiques simples ou complexes prescrites à la lentille ophtalmique 12, fonction optique qui est caractérisée par une géométrie définie dans un fichier de fabrication caractéristique des propriétés optiques simples ou complexes de la lentille ophtalmique 12.

Selon une variante, on a aussi besoin de connaitre des paramètres de personnalisation du porteur et /ou des paramètres de la géométrie de la monture destinée à recevoir la lentille ophtalmique 12, pour ajuster la fonction optique de cette lentille ophtalmique 12 à ses conditions d'utilisation finales.

La connaissance de la fonction optique, ainsi que de certains paramètres de personnalisation et/ou de monture, permet de connaître une enveloppe géométrique requise pour la lentille ophtalmique 12 (aussi appelée enveloppe externe tridimensionnelle). Cette enveloppe géométrique définit les caractéristiques géométriques de la lentille ophtalmique (12).Cette enveloppe externe tridimensionnelle englobe l'enveloppe géométrique du système optique de départ 20, 41 et celle(s) de l'élément optique complémentaire 25, 30, 35, 47 et 50, lequel peut être formé d'une ou de plusieurs surépaisseurs adjointes sur au moins une face du système optique de départ 20, 41.

On rappelle que par fonction optique d'une lentille ophtalmique, d'un système optique ou d'un élément optique, on entend la réponse optique de cette lentille ou de ce système ou de cet élément, c'est-à-dire une fonction définissant toute modification de propagation et de transmission d'un faisceau optique à travers la lentille, le système ou l'élément optique concerné, quelle que soit l'incidence du faisceau optique entrant et quelle que soit l'étendue géométrique d'un dioptre d'entrée illuminée par le faisceau optique incident.

Plus précisément, dans le domaine ophtalmique, la fonction optique est définie comme la répartition des caractéristiques de puissance porteur et d'astigmatisme associées à la lentille, au système ou à l'élément optique pour l'ensemble des directions du regard d'un porteur de cette lentille, de ce système ou de cet élément. Cela suppose bien entendu la prédétermination du positionnement géométrique de la lentille, du système ou de l'élément optique par rapport à l'œil du porteur.

Dans le cadre de la présente invention, qui se situe dans le domaine de l'ophtalmique, la fonction optique à fournir à la lentille ophtalmique permet de corriger des aberrations, c'est-à-dire des défauts d'un système optique, à savoir l'œil du porteur de la lentille ophtalmique, qui sont ici uniquement d'ordre dit inférieur. En d'autres termes, la fonction optique à fournir à la lentille ophtalmique ne se limite pas à corriger des aberrations d'ordre dit supérieur.

En pratique, dans le domaine de l'ophtalmique, les propriétés ophtalmiques prescrites au porteur de la lentille ophtalmique, qui définissent la fonction optique à fournir à cette lentille, sont généralement exprimées en dioptries (D) et sont quantifiées par incrémentation de 0,25 D.

On notera que lors de la fabrication de telles lentilles ophtalmiques, il est généralement admis des tolérances de fabrication de l'ordre de 0,06 D à 0,12 D.

On notera également que la puissance porteur est une manière de calculer et d'ajuster la puissance de la lentille ophtalmique, qui se différencie de la puissance frontofocomètre. Le calcul en puissance porteur assure que la puissance perçue par le porteur (c'est-à-dire la puissance du faisceau de lumière qui rentre dans l'œil), une fois la lentille positionnée dans la monture et portée par le porteur, corresponde à la puissance prescrite. En général, en tout point du verre, notamment au niveau des points de contrôle de vision de loin et de vision de près, pour un verre progressif, la puissance mesurée avec un frontofocomètre se différencie de la puissance porteur. Cependant, la puissance porteur au niveau du centre optique d'une lentille unifocale est généralement proche de la puissance observée avec un frontofocomètre positionné en ce point.

La figure 2 montre, schématiquement, une lentille ophtalmique 12, obtenue à partir d'un système optique de départ 20 et d'un élément optique complémentaire 25 fabriqué de manière additive sur le support de réception.

On notera que l'ensemble formé par le système optique de départ 25 et l'élément optique complémentaire 25 forme une lentille ophtalmique 12 dite hybride.

Le système optique de départ 20 présente un corps 21 pourvu d'une première face 22, dite face arrière, qui est ici concave ainsi qu'une deuxième face 23, dite face avant, qui est ici convexe.

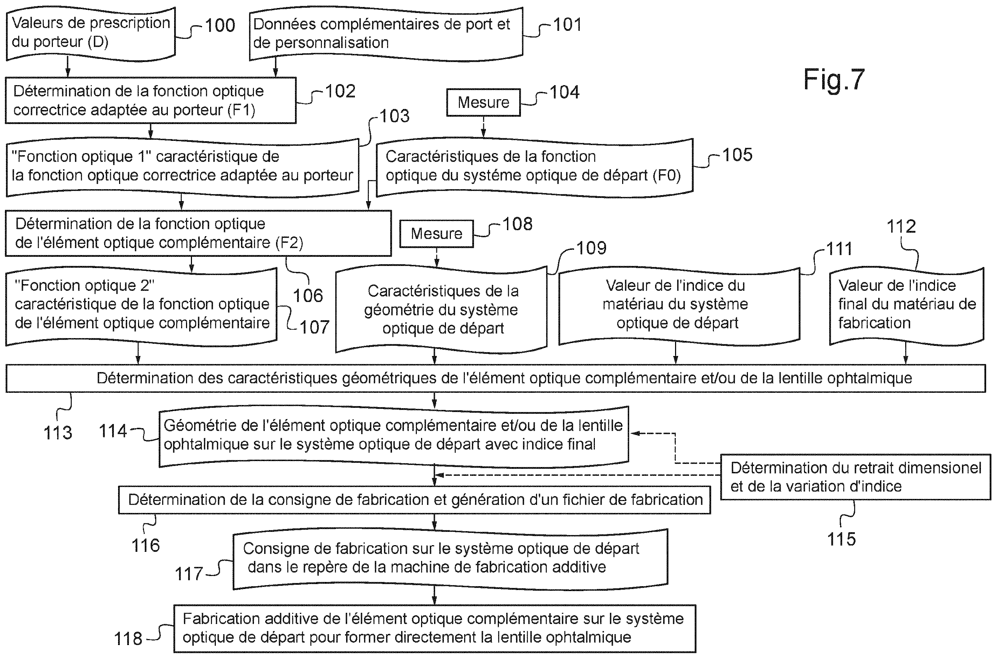

On notera que les faces avant et arrière 22 et 23 définissent deux dioptres qui vont caractériser la fonction optique de base (notée F₀ sur la figure 7) du système optique de départ 20 de la lentille ophtalmique 12.

Ici, le système optique de départ 20 est un verre de lunette dit semi-fini, dont la face avant 23 présente une surface finie, autrement dit ayant une courbure ou des rayons de courbure désirés, et qui a déjà subie un ou plusieurs traitements, par exemple un traitement anti-rayures.

Ce système optique de départ 20 est réalisé en un matériau généralement utilisé pour la fabrication de lentilles ophtalmiques et présente ici une fonction optique non nulle simple (il pourrait présenter une fonction optique complexe), les caractéristiques de cette fonction optique simple étant connues et caractérisées dans un fichier stocké ou chargé dans l'unité de contrôle et de commande 2 de la machine de fabrication additive 1.

Le système optique de départ 20 comporte une tranche périphérique 24 raccordant la face arrière 22 à la face avant 23.

Le système optique de départ 20 a ici été fabriqué directement avec un contour adapté à une forme d'une monture prédéterminée dans laquelle la lentille ophtalmique 12 est configurée pour être montée.

En variante, le système optique de départ 20 n'est pas directement fabriqué au contour de monture mais nécessite une étape de détourage pour adapter son contour à la monture.

L'élément optique complémentaire 25 présente un corps 26 pourvu d'une première face 27, dite face arrière, qui est ici pseudo-concave ainsi qu'une deuxième face 28, dite face avant, qui est ici convexe.

On notera que les faces avant et arrière 28 et 27 définissent également deux dioptres qui vont caractériser la fonction optique complémentaire (notée F₂ sur la figure 7) de l'élément optique complémentaire 25 de la lentille ophtalmique 12, laquelle fonction optique complémentaire présente ici notamment une addition.

L'élément optique complémentaire 25 comporte une tranche périphérique 29 raccordant la face arrière 27 à la face avant 28.

Ici, l'élément optique complémentaire 25 a été fabriqué de manière additive sur la face arrière 22 du système optique de départ 20 pour former la lentille ophtalmique 12. Ainsi, la face avant 28 de l'élément optique complémentaire 25 est parfaitement complémentaire de la face arrière 22 du système optique de départ 20.

L'élément optique complémentaire 25 forme donc ici une unique surépaisseur adjointe à la face arrière 22 du système optique de départ 20.

On notera que pour la fabrication additive de l'élément optique complémentaire 25, le système optique de départ 20 a été introduit dans la machine et positionné sur le support de réception avec la face avant 23 du système optique de départ 20 qui repose sur une face du support de réception.

L'élément optique complémentaire 25 a été fabriqué au contour de monture de sorte que sa tranche périphérique 29 se trouve dans le prolongement de la tranche périphérique 24 du système optique de départ 20.

En variantes, l'élément optique complémentaire 25 peut avoir une tranche périphérique formant un contour légèrement différent de celui désiré pour la lentille ophtalmique 12, par exemple légèrement moins important ou légèrement plus important qu'un contour configuré pour être introduit dans la monture prédéterminée, ou comportant des extensions pour permettre une préhension ou pouvant avoir une autre fonction. Dans le cas où l'élément optique complémentaire 25 présente une tranche périphérique formant un contour plus important qu'un contour de la tranche désiré pour la lentille ophtalmique 12, alors on comprendra que ce contour complémentaire fait partie de la surépaisseur réalisée lors de l'étape de fabrication additive et qu'il est défini lors de l'étape de déterminer la consigne de fabrication. Dans un cas encore plus particulier, le contour de l'élément optique complémentaire 25 est exactement celui désiré pour la lentille ophtalmique 12.

On utilisera par la suite le terme "surface utile", pour le système optique de départ et/ou l'élément optique complémentaire. **Il** s'agit d'une surface incluse dans un contour correspondant au contour de la lentille ophtalmique à la forme convenant pour être introduite dans une monture prédéterminée. La lentille ophtalmique peut être mise à la forme convenant pour être introduite dans la monture prédéterminée avant le procédé, lorsque le système optique de départ a déjà ce contour, au début de procédé, par exemple par une étape de détourage préalable du système optique de départ avant de procédé à l'étape de fabrication additive de l'élément optique complémentaire, ou par détourage suite à l'étape de fabrication additive de l'élément optique complémentaire. Dans tous ces cas on peut identifier une surface du système optique de départ et/ou de l'élément optique complémentaire qui est destinée à être incluse dans le contour de la lentille ophtalmique à la forme convenant pour être introduite dans une monture prédéterminée. Cette surface spécifique est définie comme étant la surface utile.

On notera que la possibilité de fabriquer un élément optique complémentaire sur un système optique de départ qui est déjà à la forme convenant pour être introduite dans une monture prédéterminée peut permettre, d'une part, de réduire des risques de désalignement des verres qui pourraient arriver lors d'une étape postérieure de détourage pouvant être faite en magasin, et d'autre part, de réduire les stocks de semi-finis actuellement nécessaires.

L'élément optique complémentaire 25 est ici formé par une pluralité d'éléments de volume prédéterminés qui sont juxtaposés et superposés pour former une pluralité de couches superposées d'un matériau 60. Cette pluralité de couches superposées forme le corps 26 ensemble avec la face arrière 27 et la face avant 23 de cet élément optique complémentaire 25.

Ces éléments de volume prédéterminés peuvent avoir une géométrie différente et être différents en volume les uns par rapport aux autres, ainsi que le permet la mise en œuvre d'un procédé de fabrication additive. Ces éléments de volume peuvent également être constitués d'un unique matériau, ou en variante ils peuvent être formés par au moins deux matériaux différents, présentant par exemple des indices de réfraction distincts, ce qui permet d'avoir une surépaisseur à indice de réfraction variable.

On notera que l'utilisation d'au moins deux matériaux présentant des indices de réfraction différents pour la fabrication additive de l'élément optique complémentaire 25 permet d'apporter des propriétés optiques et fonctionnelles optimisées à la lentille ophtalmique 12.

On notera que les couches superposées du premier matériau 60 présentent ici des longueurs différentes de manière à former les faces avant et arrière 27 et 28 de l'élément optique complémentaire 25.

On observera que certaines technologies de fabrication additive n'ont qu'une notion relative de "couches", une couche n'étant alors qu'un ensemble de voxels artificiellement déposés lors d'un même passage de buses ou d'un même masquage. Cependant, l'enseignement de la présente invention se retranscrit aisément à ces technologies.

Ces couches présentent ici chacune une épaisseur sensiblement constante sur la longueur et elles présentent toutes sensiblement la même épaisseur. On observera que certaines technologies de fabrication additive peuvent prévoir des couches avec des épaisseurs variables au long de la couche. Cependant, l'enseignement de la présente invention se retranscrit aisément à ces technologies.

On notera que cette équi-épaisseur est ici obtenue grâce au dépôt contrôlée et commandée, par la buse ou la rampe de buses 13 de la machine de fabrication additive 1, d'une quantité déterminée d'éléments de volume prédéterminés pour chaque couche superposée du matériau 60.

Le matériau 60 est ici un polymère acrylique, et plus précisément un photopolymère, par exemple un photopolymère tel que le produit commercialisé par la société OBJET Ltd, sous la marque VeroClear^{™}.

La fabrication additive de l'élément optique complémentaire 25 peut nécessiter, en plus du dépôt de la pluralité de couches successives et superposées, une ou plusieurs étapes de photo-polymérisation. Les étapes de photo-polymérisation peuvent avoir lieu au dépôt de chaque d'élément de volume, de façon globale après le passage de la buse et/ou de la rampe de buse ou après le dépôt de chaque couche de matériau. On notera d'ailleurs, comme on le verra ci-après plus en détail, que la polymérisation de l'élément optique complémentaire 25 peut ne pas être complètement terminée à la fin de sa fabrication additive.

La lentille ophtalmique 12 ainsi obtenue présente un corps formé des corps 21 et 26 respectifs du système optique de départ 20 et de l'élément optique complémentaire 25, une face avant formée par la face avant 23 du système optique de départ 20, une face arrière formée par la face arrière 27 de l'élément optique complémentaire 25 ainsi qu'une tranche périphérique formée par les tranches périphériques 21 et 29 respectives du système optique de départ 20 et de l'élément optique complémentaire 25 ; et possède la fonction optique (notée F₁ sur la figure 7) qui lui est prescrite.

La figure 3 montre, schématiquement, une première variante de la lentille ophtalmique 12, obtenue à partir d'un système optique de départ 20 et d'un élément optique complémentaire pourvu de deux surépaisseurs 30 et 35 distinctes.

Le système optique de départ 20 a une géométrie similaire à celui décrit en référence à la figure 2, à l'exception qu'il comporte une tranche périphérique 24 qui n'est pas adaptée au contour d'une monture prédéterminée. En outre, il s'agit ici d'un palet brut, c'est-à-dire sans face dite finie, traitée avec des traitements de type valeur ajoutée tel que traitement antireflet ou traitement anti-rayure ou autres.

L'élément optique complémentaire comporte une première surépaisseur 30 adjointe à la face avant 23 du système optique de départ 20 et une deuxième surépaisseur 35 adjointe à la face arrière 22 du système optique de départ 20.

La première surépaisseur 30 présente un corps 31 pourvu d'une première face 32, dite face arrière, qui est ici concave ainsi qu'une deuxième face 33, dite face avant, qui est ici convexe.

On notera que les faces avant et arrière 33 et 32 définissent également deux dioptres qui vont caractériser une première sous fonction de la fonction optique complémentaire de l'élément optique complémentaire.

La première surépaisseur 30 comporte une tranche périphérique 34 raccordant la face arrière 32 à la face avant 33 et fabriquée directement au contour d'une monture prédéterminée.

Ici, la première surépaisseur 30 a été fabriqué de manière additive sur la face avant 23 du système optique de départ 20. La face arrière 32 de la première surépaisseur 30 est parfaitement complémentaire de la surface utile de la face avant 23 du système optique de départ 20 (la surface utile étant la partie de cette face 23 qui restera une fois le système 20 détouré et la lentille 12 obtenue).

On notera que pour la fabrication additive de la première surépaisseur 30, le système optique de départ 20 a été introduit dans la machine et positionné sur le support de réception avec la face arrière 22 du système optique de départ 20 qui repose sur une face du support de réception.

La première surépaisseur 30 est ici formée par une pluralité d'éléments de volume prédéterminés qui sont juxtaposés et superposés pour former une pluralité de couches superposées d'un matériau 60.

Cette pluralité de couches superposées forme le corps 31 ensemble avec la face arrière 32 et la face avant 33 de cette première surépaisseur 30.

La deuxième surépaisseur 35 présente un corps 36 pourvu d'une première face 37, dite face arrière, qui est ici concave ainsi qu'une deuxième face 38, dite face avant, qui est ici convexe.

On notera que les faces avant et arrière 37 et 38 définissent également deux dioptres qui vont caractériser une deuxième sous fonction de la fonction optique complémentaire de l'élément optique complémentaire.

La deuxième surépaisseur 35 comporte une tranche périphérique 39 raccordant la face arrière 37 à la face avant 38 et fabriquée directement au contour de la monture prédéterminée.

Ici, la deuxième surépaisseur 35 a été fabriqué de manière additive sur la face arrière 22 du système optique de départ 20. La face avant 38 de la deuxième surépaisseur 35 est parfaitement complémentaire d'une partie seulement de la face arrière 22 du système optique de départ 20 (la partie de cette face 22 qui restera une fois le système 20 détouré et la lentille 12 obtenue).

La deuxième surépaisseur 35 est ici formée par une pluralité d'éléments de volume prédéterminés qui sont juxtaposés et superposés pour former une pluralité de couches superposées d'un autre matériau 55 distinct du matériau 60 utilisé pour fabriquer la première surépaisseur 30.

Cette pluralité de couches superposées forme le corps 36 ensemble avec la face arrière 37 et la face avant 38 de cette deuxième surépaisseur 35.

On notera que pour la fabrication additive de la deuxième surépaisseur 35, le système optique de départ 20 et la première surépaisseur 30 ont été soulevés du support de réception 10 puis replacés sur ce dernier dans la machine et positionnés sur le support de réception avec la face avant 33 de cette première surépaisseur 30 0 et/ou avec la partie de la face avant 23 du système optique de départ 20 qui n'est pas recouverte par la première surépaisseur 30, qui repose sur une face du support de réception.

En variante, le système optique de départ est introduit dans la machine 1 et positionné sur un support de réception différent de celui décrit plus haut, présentant par exemple des pattes de maintien configurés pour maintenir le système optique de départ par sa tranche périphérique. En outre, ces pattes de maintien peuvent être articulées de sorte à fabriquer de manière additive d'abord l'une des deux surépaisseurs puis l'autre après avoir retourné l'ensemble système optique de départ-surépaisseur.

Le système optique de départ 20 est ensuite détouré de manière à lui procurer une nouvelle tranche périphérique, dans le prolongement des tranches périphériques 34 et 39 respectivement des première et deuxième surépaisseurs 30 et 35, et qui est adaptée au contour de la monture prédéterminée.

Alternativement, au moins une surépaisseur 30, 35 peut avoir une surface qui ne correspond pas à la surface utile.

En particulier, lorsque le système optique de départ 20 est détouré suite à l'étape de fabrication additive, afin de procurer au système une nouvelle tranche périphérique adaptée au contour de la monture prédéterminée, au moins l'une des tranches périphériques 34 et 39 respectivement des première et deuxième surépaisseurs 30 et 35 ne correspond pas à la nouvelle tranche périphérique. En d'autres termes, lorsque le système optique de départ a une surface plus importante que la surface utile lorsqu'est fabriqué l'élément optique complémentaire, au moins une surépaisseur peut avoir une surface qui ne correspond pas à la surface utile.

En particulier, selon un mode de réalisation, au moins l'une des surépaisseurs peut recouvrir toute la surface 23, respectivement 22, du système optique de départ 20 sur laquelle elle est déposée. Alternativement au moins une partie de la surface utile d'une de la surface 22, respectivement 23, du système optique de départ 20, n'est pas recouverte par la surépaisseur 30, 35 correspondante.

Alternativement ou de façon complémentaire, au moins une partie de la surface 23, respectivement 22, du système optique de départ 20, hors de la surface utile, est recouverte par la surépaisseur 30, 35 correspondante.

De façon préférentielle, la (les) surépaisseur(s) 30 (et 35) recouvre au moins toute la zone de la face correspondante qui est destinée à être à l'intérieur de la tranche périphérique de la lentille ophtalmique ayant un contour adapté au contour de la monture prédéterminée. En d'autres termes, la surépaisseur 30, 35 recouvre au moins toute la surface utile de la surface 22, respectivement 23, de la face du système optique de départ 20 sur laquelle elle est déposée lors de l'étape de fabrication additive.

On notera que si l'élément optique complémentaire nécessite d'avoir un contour plus petit que le contour de la lentille ophtalmique pour que cette dernière puisse être montée dans la monture, alors on comprendra que la surépaisseur recouvre toute la surface utile.

De façon encore préférentielle, au moins une des surépaisseurs 30 et 35 ne recouvre que la zone de leur face correspondante qui est destinée à être à l'intérieur de la nouvelle zone périphérique. En d'autres termes, la surépaisseur 30, 35 ne recouvre que la surface utile de la surface 22, respectivement 23, de la face du système optique de départ 20 sur laquelle elle est déposée lors de l'étape de fabrication additive.

La lentille ophtalmique 12 ainsi obtenue présente un corps formé des corps 21, 31 et 36 respectifs du système optique de départ 20 et des deux surépaisseurs 30 et 35 de l'élément optique complémentaire, une face avant formée par la face avant 33 de la première surépaisseur 30 de l'élément optique complémentaire, une face arrière formée par la face arrière 37 de la deuxième surépaisseur de l'élément optique complémentaire ainsi qu'une tranche périphérique formée par les tranches périphériques du système optique de départ 20 détouré et des surépaisseurs 30 et 35 de l'élément optique complémentaire ; et possède la fonction optique qui lui est prescrite.

La figure 4 montre, schématiquement, deux lentilles ophtalmiques 12 conformément à une deuxième variante de réalisation, obtenues à partir d'un système optique de départ 40 et de deux éléments optiques complémentaires 47 fabriqués de manière additive.

Ici, le système optique de départ 40 est formé par un ensemble comportant une monture de lunette ayant deux branches 42 et un cadre 43 auquel sont raccordées les deux branches 42, ainsi que deux lentilles de base 41 montées sur le cadre 43 de la monture.

Chaque lentille de base 41 présente un corps 44 pourvu d'une première face 45, dite face arrière, qui est ici concave ainsi qu'une deuxième face 46, dite face avant, qui est ici convexe.

Chaque lentille de base 41 correspond ici à des verres dits de présentation que l'on trouve généralement chez les opticiens, déjà montés sur les montures de présentation.

Ainsi, on notera que les faces avant et arrière 45 et 46 définissent deux surfaces courbes qui caractérisent une fonction optique de base, qui est ici nulle, de chaque lentille de base 41.

Chaque lentille de base 41 comporte une tranche périphérique raccordant la face arrière 45 à la face avant 46.

Chaque lentille de base 41 comporte un contour adapté à une forme de monture prédéterminée dans laquelle les lentilles ophtalmique 12 sont configurées pour être montées, puisqu'elle est initialement, c'est-à-dire avant de commencer le procédé selon l'invention, déjà montée dans la monture prédéterminée.

Chaque élément optique complémentaire 47 est ici similaire à l'élément optique complémentaire 25 décrit ci-dessus en référence à la figure 2.

En particulier, chaque élément optique complémentaire 47 présente un corps pourvu d'une première face 48, dite face arrière, qui est ici concave ainsi qu'une deuxième face 49, dite face avant, qui est ici convexe.

On notera que les faces avant et arrière 48 et 49 définissent deux dioptres qui vont caractériser la fonction optique complémentaire de chaque élément optique complémentaire 47 de chaque lentille ophtalmique 12.

Chaque élément optique complémentaire 47 comporte une tranche périphérique raccordant la face arrière 48 à la face avant 49.

Ici, chaque élément optique complémentaire 47 a été fabriqué de manière additive sur la face arrière 49 d'une lentille de base 41 respective pour former une lentille ophtalmique 12 respective. Ainsi, la face avant 49 de chaque élément optique complémentaire 47 est parfaitement complémentaire de la face arrière 45 de la lentille de base 41 respective sur laquelle l'élément optique complémentaire 47 a été fabriqué.

Chaque élément optique complémentaire 47 forme donc ici une unique surépaisseur adjointe à la face arrière 45 d'une lentille de base 41 respective.

On notera que pour la fabrication additive des deux éléments optiques complémentaires 47, le système optique de départ 40 a été introduit dans la machine 1 et positionné sur un support de réception configuré pour recevoir et maintenir ce système par exemple par les branches 42 et le cadre 43 de la monture.

Chaque élément optique complémentaire 47 a été fabriqué directement au contour de la monture de sorte que sa tranche périphérique se trouve dans le prolongement de la tranche périphérique d'une lentille de base 41 respective.

Chaque élément optique complémentaire 47 est ici formé par une pluralité d'éléments de volume prédéterminés qui sont juxtaposés et superposés pour former une pluralité de couches superposées d'un matériau 60.

Cette pluralité de couches superposées forme le corps ensemble avec la face arrière 48 et la face avant 49 de chaque élément optique complémentaire 47.

Les deux lentilles ophtalmiques 12 ainsi obtenues présente chacune un corps formé des corps respectifs d'une lentille de base 41 et d'un élément optique complémentaire 47, une face avant formée par la face avant 26 de la lentille de base 41 respective, une face arrière formée par la face arrière 48 de l'élément optique complémentaire 47 respectif ainsi qu'une tranche périphérique formée par les tranches périphériques respectives des lentille de base 41 et élément optique complémentaire 47 ; et possède la fonction optique qui lui est prescrite.

La figure 5 montre, schématiquement, une troisième variante de la lentille ophtalmique 12, obtenue à partir d'un système optique de départ 20 et d'un élément optique complémentaire 50 fabriqué de manière additive dans une machine distincte de celle illustrée sur la figure 1. Il s'agit ici d'une machine de stéréolithographie (non illustrée).

Le système optique de départ 20 est similaire à celui décrit en référence à la figure 3.

Le système optique de départ 20 est ici réalisé en un matériau généralement utilisé pour la fabrication de lentilles ophtalmiques tel que le polymère allylique connu sous le nom CR39.

Le système optique de départ 20 présente donc un indice de réfraction prédéterminé, par exemple égal à environ 1,5.

L'élément optique complémentaire 50 présente un corps 51 pourvu d'une première face 52, dite face arrière, qui est ici concave ainsi qu'une deuxième face 53, dite face avant, qui est ici convexe.

On notera que les faces avant et arrière 52 et 53 définissent également deux dioptres qui vont caractériser la fonction optique complémentaire de l'élément optique complémentaire 50 de la lentille ophtalmique 12.

L'élément optique complémentaire 50 est fabriqué de sorte à ce qu'il ne présente pas de tranche périphérique mais plutôt un bord périphérique venant à fleur de la tranche périphérique 24 du système optique de départ 20.

Ici, l'élément optique complémentaire 50 a été fabriqué de manière additive sur la face avant 23 du système optique de départ 20 pour former la lentille ophtalmique 12. Ainsi, la face arrière 52 de l'élément optique complémentaire 50 est parfaitement complémentaire de la face avant 23 du système optique de départ 20.

L'élément optique complémentaire 50 forme donc ici une unique surépaisseur adjointe à la face avant 23 du système optique de départ 20.

On notera que pour la fabrication additive de l'élément optique complémentaire 50, le système optique de départ 20 a été introduit dans la machine de stéréolithographie et positionné sur son support de réception avec la face arrière 22 du système optique de départ 20 qui repose sur une face du support de réception.

L'élément optique complémentaire 50 est ici fabriqué selon un procédé de stéréolithographie et ainsi formé par une pluralité d'éléments de volume prédéterminés qui sont juxtaposés et superposés pour former une pluralité de couches superposées d'un matériau 60.

En particulier, l'élément optique complémentaire 50 est réalisé par le dépôt d'une pluralité d'au moins un élément de volume prédéterminé sur toute la surface de la face avant 23 du système optique de départ 20 afin d'obtenir le bord périphérique.

La pluralité de couches superposées forme le corps 51 ensemble avec la face arrière 52 et la face avant 53 de cet élément optique complémentaire 50.

La lentille ophtalmique 12 (formé du système optique de départ 20 et de l'élément optique complémentaire 50) est ensuite détourée de manière à lui procurer une tranche périphérique référencée 54 sur la figure 5, laquelle est adaptée au contour d'une monture prédéterminée.

La lentille ophtalmique 12 ainsi obtenue présente un corps formé des corps 21 et 51 respectifs du système optique de départ 20 et de l'élément optique complémentaire 50, une face avant formée par la face avant 53 de l'élément optique complémentaire 50, une face arrière formée par la face arrière 22 du système optique de départ 20 ainsi qu'une tranche périphérique formée par les tranches périphériques détourées respectives du système optique de départ 20 et de l'élément optique complémentaire 50 ; et possède la fonction optique qui lui est prescrite.

On va maintenant décrire plus en détail, au travers de la figure 6 et en référence par exemple à la figure 3, un procédé de fabrication d'une lentille ophtalmique 12.

Le procédé de fabrication comporte l'étape 200 de fournir le système optique de départ 20.

Le système optique de départ 20 est choisi en fonction de la lentille 12 à fabriquer et sa géométrie est donc connue, laquelle géométrie est caractérisée par un fichier de surface qui est stocké ou chargé dans l'unité de contrôle et de commande 2 de la machine de fabrication additive 1.

Dans le cas où le système optique de départ 20 présente une fonction optique de base non nulle, cette dernière est également connue et caractérisée directement dans le fichier de surface.

Le procédé comporte en outre l'étape 300 d'introduire le système optique de départ 20 dans la machine de fabrication additive 1 et de le positionner dans cette machine 1, dans une position initiale par rapport à un repère de cette machine 1.

Cette position initiale peut être définie comme étant une position dans laquelle au moins une des faces du système optique de départ doit être accessible pour que l'élément optique complémentaire puisse y être fabriqué de manière additive (la face étant prédéterminée).

Cette position initiale peut être définie, en variante ou en complément, comme étant une position dans laquelle le système optique de départ est centré (ou tout au moins dans une position prédéterminée) par rapport au repère de la machine.

Cette position initiale peut également être définie, en variante ou en complément, comme étant une position dans laquelle le système optique de départ est orienté angulairement, par exemple dans le cas où ce dernier présente un contour non circulaire et/ou une fonction optique complexe et/ou un cylindre.

Cette position initiale peut être définie, en variante ou en complément, comme étant une position dans laquelle le système optique de départ est incliné.

En particulier, le système optique de départ 20, 41 est positionné sur le support de réception 10 de la machine 1.

Le procédé comporte optionnellement l'étape 400 de vérifier la position du système optique de départ 20, 41 dans la machine de fabrication additive 1 et l'étape de déclencher une action correctrice s'il existe un écart entre la position initiale du système optique de départ 20, 41 et une position prédéterminée dans le repère de la machine 1.

Cette vérification de positionnement peut être réalisée manuellement ou de manière assistée. Ainsi, le système de détection de la machine 1, formé par exemple par un dispositif de lecture optique et/ou un dispositif de capture d'images et/ou un dispositif mécanique, est configuré pour détecter la position du système optique de départ 20, 41 sur le support de réception et/ou par rapport à la position prédéterminée dans le repère de la machine 1.

L'action correctrice peut être le repositionnement manuel ou automatisé du système optique de départ 20, 41 sur le support de réception 10 et/ou du support de réception 10 lui-même dans la machine 1.

L'action correctrice peut être, en variante ou en complément, la modification de la consigne de fabrication additive de l'élément optique complémentaire 25, 30, 35, 47 et 50 et/ou de la lentille ophtalmique 12 pour l'adapter à la position initiale du système optique de départ.

Le procédé comporte en outre l'étape 500 de fabriquer de manière additive l'élément optique complémentaire 25, 30, 35, 47 et 50 avec la machine de fabrication additive 1 ou une autre machine de fabrication additive telle qu'une machine de stéréolithographie, directement sur le système optique de départ 20, 41 selon une géométrie déterminée et selon une consigne de fabrication déterminée.

Le procédé comporte optionnellement l'étape 600 d'irradier la lentille ophtalmique 12 obtenue. Cette étape 600 consiste à terminer la polymérisation de l'élément optique complémentaire 25, 30, 35, 47 et 50.

Le procédé comporte optionnellement l'étape 700 de détourer au moins partiellement la lentille ophtalmique 12. Cette étape 700 consiste à créer une tranche périphérique sur la lentille 12 qui soit adaptée à une monture prédéterminée. Cette étape 700 n'est nécessaire que si le système optique de départ n'est pas avant l'étape 500 de fabriquer l'élément optique complémentaire déjà au contour adapté à la monture prédéterminée.

Le procédé comporte optionnellement l'étape 800 de traiter/vernir au moins une face de la lentille ophtalmique 12. Cette étape 800 consiste à ajouter un revêtement présentant des propriétés fonctionnelles prédéterminées sur au moins une des deux faces de la lentille 12. Il peut s'agir par exemple d'un revêtement antibuée et/ou antireflets et/ou une teinte et/ou un revêtement photochromique et/ou anti-rayures et/ou du dépôt d'un film polarisé, etc. Il peut s'agir aussi d'un film de vernis choisi afin de pallier des irrégularités de surface (vernis lissant configuré pour lisser les aspérités et la rugosité de surface résiduelle de la fabrication additive). En particulier il est ici fait référence à des couches de vernis telles que celles présentées dans les demandes de brevets EP1896878 de la demanderesse, ou JP 2002-182011 qui sont configurées pour permettre à une surface ayant une certaine qualité initiale d'atteindre une qualité ophtalmique, l'application de cette couche de vernis ne permettant pas de modifier les courbures principales de la surface de la lentille, telles que la courbure principale ou un motif dessinant la ou les additions.

La figure 7 illustre des étapes du procédé de fabrication et plus précisément des étapes pour la détermination d'une consigne de fabrication de l'élément optique complémentaire 25, 30, 35, 47 et 50, et/ou de la lentille ophtalmique 12, en vue de sa fabrication additive grâce à la machine de fabrication additive 1 illustrée sur la figure 1.

L'unité de contrôle et de commande 2 de la machine de fabrication additive 1 est configurée pour recevoir à l'étape 100 un fichier comportant des valeurs de prescription d'un porteur de la lentille ophtalmique 12 à fabriquer.

Ces valeurs de prescription du porteur sont généralement exprimées en dioptrie (D).

L'unité 2 est en outre configurée pour recevoir à l'étape 101 des données complémentaires de port et de personnalisation, y compris des données relatives à la vision binoculaire, ces données étant liées à la fois au porteur, à une monture prévue pour recevoir la lentille ophtalmique 12 et à la prescription.

On notera que ces données complémentaires de port et de personnalisation correspondent par exemple à des valeurs géométriques qui caractérisent notamment la monture et le comportement visuel du porteur. Il peut s'agir par exemple d'une distance entre l'œil et la lentille et/ou d'une position du centre de rotation de l'œil, et/ou d'un coefficient œil-tête, et/ou d'un angle pantoscopique et/ou d'un galbe de la monture et/ou du contour de la monture.

L'unité 2 est configurée pour déterminer à l'étape 102 une fonction optique correctrice adaptée au porteur à partir des valeurs de prescription porteur et des données complémentaires de port et de personnalisation reçues aux étapes respectives 100 et 101, et en fonction du positionnement géométrique de la lentille 12 par rapport à l'œil du porteur.

Cette fonction optique correctrice adaptée au porteur correspond à la fonction optique, dite cible, de la lentille ophtalmique 12 à fabriquer.

On notera que la détermination de la fonction optique correctrice adaptée au porteur peut être effectuée par exemple à l'aide d'un logiciel de tracé de rayons, lequel permet de déterminer la puissance porteur et l'astigmatisme résultant de la lentille dans les conditions de port de cette dernière. Une optimisation peut être effectuée en suivant des méthodes d'optimisation optique bien connues.

On notera également que l'étape 101 est optionnelle et donc que la fonction optique correctrice adaptée au porteur peut être déterminée par l'unité 2 à l'étape 102, seulement à partir des valeurs de prescription reçues à l'étape 101, et en fonction du positionnement géométrique de la lentille 12 par rapport à l'œil du porteur.

L'unité 2 est configurée pour générer à l'étape 103 un fichier appelé « fonction optique 1 » qui caractérise cette fonction optique correctrice adaptée au porteur, notée aussi F₁, déterminée à l'étape 102.

On notera que la fonction optique correctrice adaptée au porteur peut, à la place d'être déterminée par l'unité 2 à l'étape 102, être directement reçue par cette unité 2 sous forme d'un tel fichier.

L'unité 2 est configurée pour recevoir à l'étape 105 un fichier comportant des caractéristiques de la fonction optique de base, notée F₀, du système optique de départ 20, 41. Cette fonction optique peut être simple, complexe ou afocale (autrement dit nulle).

Ce fichier est sensiblement similaire au fichier « fonction optique 1 » si ce n'est qu'il ne caractérise pas la lentille ophtalmique 12 à fabriquer mais le système optique de départ 20, 41 choisi.

On observera que ce fichier comporte des caractéristiques qui sont ici mesurées directement sur ce système optique de départ 20, 41, à l'étape 104. Ces caractéristiques pourraient être prédéterminées et connues, sans nécessiter de mesures.

L'unité 2 est configurée pour déterminer, à l'étape 106, une fonction optique complémentaire, notée F₂, de l'élément optique complémentaire 25, 30, 35, 47 et 50 que ce dernier présente après fabrication additive.

**Il** s'agit en fait de la fonction optique complémentaire à fournir à cet élément optique complémentaire 25, 30, 35, 47 et 50, dite « fonction optique 2 », en prenant en considération que ce dernier est fabriqué de manière additive directement sur le système optique de départ 20, 41 (lui-même ayant une fonction optique de base), pour que la lentille ophtalmique 12, résultat de cette fabrication additive de l'élément optique complémentaire 25, 30, 35, 47 et 50 directement sur le système optique de départ 20, 41, apporte au porteur la fonction optique correctrice F₁ qui lui est prescrite.

Cette étape de détermination 106 est donc réalisée à partir des caractéristiques que comportent le fichier généré à l'étape 103 et le fichier reçu (ou généré) à l'étape 105, respectivement relatifs à la fonction optique correctrice adaptée au porteur ainsi qu'à la fonction optique de base du système optique de départ 20, 41.

L'unité 2 est configurée pour générer à l'étape 107 un fichier appelé « fonction optique 2 » qui caractérise la fonction optique complémentaire de l'élément optique complémentaire 25, 30, 35, 47 et 50 déterminée à l'étape 106.

L'unité 2 est en outre configurée pour recevoir à l'étape 109 un fichier comportant des caractéristiques de la géométrie du système optique de départ 20, 41.

On observera que ce fichier comporte des caractéristiques géométriques qui sont ici mesurées directement sur ce système optique de départ 20, 41, à l'étape 108. Ces caractéristiques pourraient être prédéterminées et connues, sans nécessiter de mesures.

Parmi ces caractéristiques géométriques peuvent se trouver en particulier le contour du système optique de départ, les coordonnées (x, y, z) d'un nombre fini de points de chaque surface ou une fonction de surface pour chaque surface ainsi qu'une épaisseur séparant en tout point les deux surfaces... etc

L'unité 2 est en outre configurée pour recevoir à l'étape 111 un fichier comportant des caractéristiques liées à l'indice de réfraction du système optique de départ 20, 41.

On notera que les caractéristiques liées à l'indice de réfraction de ce système optique de départ 20, 41 peuvent être mesurées ou prédéterminées et connues, sans nécessiter de mesures, que l'indice soit constant en tout point ou non dans le système optique de départ.

L'unité 2 est en outre configurée pour recevoir à l'étape 112 un fichier comportant des caractéristiques liées à l'indice de réfraction final du matériau 55, 60 utilisé pour la fabrication additive de l'élément optique complémentaire 25, 30, 35, 47 et 50. Cet indice est dit final car c'est l'indice que doit présenter cet élément optique complémentaire 25, 30, 35, 47 et 50 une fois ce dernier fabriqué et polymérisé sur le système optique de départ 20, 41, pour former la lentille ophtalmique 12.

L'unité 2 est configurée pour déterminer, à l'étape 113, des caractéristiques géométriques de l'élément optique complémentaire 25, 30, 35, 47 et 50 et/ou de la lentille ophtalmique 12 à fabriquer, à partir des fichiers générés et/ou reçus aux étapes 107, 109, 111 et 112, respectivement relatifs à la fonction optique complémentaire de l'élément optique complémentaire 25, 30, 35, 47 et 50, à la géométrie et à l'indice du système optique de départ 20, 41 ainsi qu'à la valeur de l'indice final du matériau de fabrication de l'élément optique complémentaire 25, 30, 35, 47 et 50.

L'unité 2 est en outre configurée pour générer à l'étape 114 un fichier qui caractérise les caractéristiques géométriques de l'élément optique complémentaire 25, 30, 35, 47 et 50 et/ou de la lentille ophtalmique 12 à fabriquer, déterminées à l'étape 113.

Ce fichier comporte des caractéristiques géométriques de l'élément optique complémentaire 25, 30, 35, 47 et 50 et/ou de la lentille ophtalmique 12 représentatif de la géométrie souhaitée de cet élément optique complémentaire 25, 30, 35, 47 et 50 et/ou de cette lentille ophtalmique 12 une fois cet élément optique complémentaire 25, 30, 35, 47 et 50 fabriqué de manière additive directement sur le système optique de départ 20, 41, avec son indice final (c'est-à-dire une fois polymérisé ou photo-polymérisé).

On notera que ce fichier est un fichier dit de surface qui est pourvu par exemple de caractéristiques géométriques sous la forme de coordonnées x, y, z, θ, en un nombre fini de points, ou d'une fonction de surface z = f(x,y) définissant chaque face, de caractéristiques liées à un indice de réfraction en tout point, de diverses distances et angles tels que ceux mentionnés plus haut.

Autrement dit, ce fichier de surface reflète une description de la géométrie souhaitée de cet élément optique complémentaire 25, 30, 35, 47 et 50 et/ou de cette lentille ophtalmique 12 à fabriquer, avec en pratique, un agencement déterminé des éléments de volume prédéterminés du ou des matériaux.

On notera que ce fichier de surface peut être visualisé sous la forme de données de modélisation 3D typiquement dans un fichier de conception CAO afin de représenter la lentille ophtalmique 12 pourvu de son système optique de départ 20, 41 et de son élément optique complémentaire 25, 30, 35, 47 et 50 en tant qu'objet numérique.

On notera que la géométrie de l'élément optique complémentaire 25, 30, 35, 47 et 50 est déterminée de sorte à être directement adaptée au contour de la monture dans laquelle la lentille 12 est configurée pour être montée. Une étape de détourage n'est alors nécessaire que si le système optique de départ 20, 41 ne présente pas lui-même un contour adapté à cette monture. En variante, non couverte par l'invention telle que revendiquée, le contour de l'élément 25, 30, 35, 47 et 50 et/ou de la lentille 12 défini dans ce fichier ne correspond pas au contour de la monture et une opération de détourage est nécessaire, quelques soit le contour du système optique de départ 20, 41.

L'unité 2 est configurée pour déterminer, optionnellement, à l'étape 115, un retrait dimensionnel et/ou une variation d'indice de l'élément optique complémentaire 25, 30, 35, 47 et 50. Il s'agit ici d'évolutions possibles ultérieures, d'une part, de l'indice de réfraction du matériau 55, 60 dans lequel est fabriqué l'élément optique complémentaire 25, 30, 35, 47 et 50 et d'autre part, de la géométrie (retrait dimensionnel) de cet élément optique complémentaire 25, 30, 35, 47 et 50.

L'unité 2 est en outre configurée pour déterminer à l'étape 116 la consigne de fabrication de l'élément optique complémentaire 25, 30, 35, 47 et 50, et générer ainsi un fichier de fabrication dit « consigne de fabrication ».

Cette étape 116 de détermination de la consigne est réalisée à partir des caractéristiques que comporte le fichier généré à l'étape 114 relatif à la géométrie de l'élément optique complémentaire 25, 30, 35, 47 et 50 et/ou de la lentille ophtalmique 12 directement sur le système optique de départ 20, 41, avec indice final, et à partir de la détermination du retrait dimensionnel et de la variation d'indice à l'étape 115.

L'unité 2 est configurée pour générer à l'étape 117 le fichier de fabrication correspondant à la consigne de fabrication de l'élément optique complémentaire 25, 30, 35, 47 et 50 et/ou de la lentille ophtalmique 12 directement sur le système optique de départ 20, 41, lui-même positionné sur le support de réception 10 selon une position déterminée dans un repère de la machine de la fabrication additive 1.

Ce fichier « consigne » est similaire au fichier de géométrie de l'élément optique complémentaire 25, 30, 35, 47 et 50 et/ou de la lentille ophtalmique 12 généré à l'étape 114, si ce n'est qu'il reflète une description transcrite de la géométrie souhaitée de cet élément optique complémentaire 25, 30, 35, 47 et 50 et/ou de cette lentille ophtalmique 12 à fabriquer, avec en pratique, un agencement modifié des éléments de volume prédéterminés du ou des matériaux ; incluant une orientation angulaire déterminée de l'élément optique complémentaire 25, 30, 35, 47 et 50 sur le système optique de départ 20, 41 et/ou du système optique de départ 20, 41 sur le support de réception 10 et/ou du support de réception 10 dans la machine 1, pour la fabrication de cet élément optique complémentaire 25, 30, 35, 47 et 50 ; et des modifications liées par exemple à un éventuel retrait dimensionnel ainsi qu'à une éventuelle variation d'indice de l'élément optique complémentaire 25, 30, 35, 47 et 50 déterminés à l'étape 115.

C'est aussi à partir de ce fichier « consigne » qui caractérise la géométrie et la fonction optique complémentaire à apporter à l'élément optique complémentaire 25, 30, 35, 47 et 50 que ce dernier est fabriqué de manière additive.

Pour cela, l'unité 2 peut également être configurée pour lancer à l'étape 118 la fabrication additive de l'élément optique complémentaire 25, 30, 35, 47 et 50 directement sur le système optique de départ 20, 41 dans la machine de fabrication additive 1, sur la base des caractéristiques du fichier de fabrication généré à l'étape 117.

L'unité de contrôle et de commande 2 est configurée pour exécuter un logiciel pour la mise en œuvre de différentes étapes du procédé de fabrication de la lentille ophtalmique 12, en utilisant les paramètres reçus, afin de déterminer la consigne de fabrication de l'élément optique complémentaire 25, 30, 35, 47 et 50 et/ou de la lentille ophtalmique 12, voire de réaliser cet élément optique complémentaire 25, 30, 35, 47 et 50 pour obtenir la lentille ophtalmique 12.

Dans une variante non illustrée, une interface de communication client-serveur comporte un côté dit fournisseur et un autre côté dit client, ces deux côtés communicant via un réseau, par exemple du type internet.

Le côté fournisseur comporte un serveur relié à une unité de contrôle et de commande du même type que celle de la figure 1, mais cette fois-ci non intégrée à une machine de fabrication additive, ce serveur étant configuré pour communiquer avec l'interface internet.

Le côté client est configuré pour communiquer avec l'interface internet, et est relié à une unité de contrôle et de commande du même type que celle du côté fournisseur.

En outre, l'unité côté client est reliée à une machine de fabrication additive du même type que celle de la figure 1 pour fabriquer l'élément optique complémentaire de la lentille ophtalmique.

L'unité est configurée pour recevoir, côté client, les fichiers de données correspondant aux étapes 100, optionnellement 101, 105, 109, 111 et 112.

Cette unité envoie par l'intermédiaire de l'interface internet et du serveur ces données à l'unité côté fournisseur pour la détermination de la consigne de fabrication de l'élément optique complémentaire et/ou de la lentille ophtalmique.

Cette unité exécute via son système de traitement de données le programme d'ordinateur qu'il contient pour mettre en œuvre le procédé de fabrication et ainsi déduire la consigne de fabrication pour fabriquer l'élément optique complémentaire et/ou la lentille ophtalmique.

L'unité envoie, par l'intermédiaire du serveur et du réseau un fichier représentatif de la consigne de fabrication déterminée à l'unité de contrôle et de commande côté client.

Cette unité côté client est configurée pour exécuter un logiciel pour la mise en œuvre du procédé de fabrication de la lentille ophtalmique, en utilisant les paramètres reçus, afin de réaliser l'élément optique complémentaire pour obtenir la lentille ophtalmique.

Dans une variante non illustrée, le procédé peut comporter différentes étapes relatives à l'optimisation de la fabrication additive et en particulier au dépôt d'au moins un matériau sur le système optique de départ pour fabriquer l'élément optique complémentaire.

Le procédé peut comporter, par exemple soit lors de l'exécution du fichier de consigne, soit lors de l'établissement dudit fichier, une étape de détermination d'une orientation préférentielle du système optique de départ dans la machine de fabrication additive selon au moins un critère.

Par exemple, dans le cas d'une machine de fabrication additive comportant un balayage par une série de buses, il peut être identifié une direction de balayage de la série de buses de façon à minimiser, pour l'ensemble de l'étape de fabrication additive de l'élément optique complémentaire, une distribution de distances entre chaque buse de la série de buses et la surface du système optique de départ. En effet, lorsque la surface du système optique de départ est pseudo-sphérique, et qu'une série de buses est positionnée au-dessus de la surface, il est possible, compte tenu du profil en altitude de chacune des buses de la série de buses, de définir une valeur exprimant les variations de distance entre chaque buse et un point de la surface cible pour cette buse. Cette valeur peut être un écart type, une moyenne, une différence entre une distance maximum et une distance minimum ou tout autre paramètre.

On notera qu'en tenant compte des rayons de courbure définissant la surface du système optique de départ et du contour de l'élément optique complémentaire à déposer sur la surface, il est possible de trouver une orientation de la série de buse par rapport au système optique de départ qui, pour chaque position de la série de buses lors de l'étape de fabrication additive, minimise la valeur exprimée ci-dessus de façon à minimiser les variations de distance entre la buse et l'élément optique de départ.

Par exemple, si l'élément optique complémentaire à fabriquer comprend une dimension plus grande qu'une autre, il est fréquent que la variation de hauteur soit plus importante sur le trajet parcourant la dimension la plus grande. Une situation inverse peut se produire pour certaines lentilles toriques, a-toriques, asphériques et/ou comportant une addition, en fonction de l'orientation des axes du tore et/ou du positionnement de l'addition.

Plus la distance entre la surface à recouvrir et chacune des buses est homogène pour toute la série de buses, plus il est aisé de contrôler la précision de dépôt lors de la projection de matière par les buses.

Alternativement, si la série de buses a une longueur donnée et qu'il existe un rectangle contenant le contour de l'élément optique complémentaire et tangent à ce contour en au moins un point sur chacun des côté de ce rectangle, dont la longueur du plus petit des côtés est inférieur à la longueur de la série de buses, le système optique de départ peut être positionné de façon à ce que l'intégralité du contour de l'élément optique complémentaire soit couverte par la série de buses en un seul passage.

On notera que les étapes relatives à l'optimisation de la fabrication additive, décrites ci-dessus, peuvent être mises en œuvre aussi bien dans un procédé de fabrication d'une lentille ophtalmique tel que celui décrit ci-dessus, c'est-à-dire comportant une étape de fabrication additive d'un élément optique complémentaire sur un système optique de départ, que dans d'autres procédés de fabrication d'une lentille ophtalmique, par exemple comportant une étape de fabrication additive de la lentille ophtalmique (d'un seul tenant), ou une étape de fabrication additive d'un élément optique complémentaire sur un support de fabrication de la machine de fabrication additive suivie d'une étape de report de cet élément optique complémentaire (voire de cet élément ensemble avec le support de fabrication) sur un système optique de départ présentant une fonction optique.

Dans des variantes non illustrées :
- la pluralité d'éléments de volume prédéterminés juxtaposés et superposés forme des couches superposées qui présentent chacune une épaisseur constante ou variable sur la longueur et/ou qui présentent toutes la même épaisseur ou pas ;
- le matériau est une composition photopolymérisable comportant une ou plusieurs familles de molécules ayant une ou plusieurs fonctions acryliques, methacryliques, acrylates, methacrylates, une famille de molécules ayant une ou plusieurs fonctions époxy, thioépoxy, thiol-ène, une famille de molécules ayant une ou plusieurs fonctions vinyle éther, vinyle caprolactame, vinylpyrolidone, une famille de matériau de type hyperbranchée, de type hybride organique/inorganique, ou une combinaison de ces fonctions ; les fonctions chimiques mentionnées pouvant être portées par des monomères ou des oligomères ou une combinaison de monomères et oligomères ;
- le matériau peut comporter au moins un photo-initiateur ;
- le matériau peut comporter des colloïdes, en particulier des particules colloïdales ayant des dimensions par exemple inférieures aux longueurs d'onde visibles, telles que par exemple des particules colloïdales d'oxyde de Silice SiO2 ou des particules colloïdales d'oxyde de Zircone ZrO2 ;
- le matériau peut comporter, dans au moins certains des éléments de volume prédéterminés, un pigment ou un colorant, par exemple un colorant qui appartient aux familles des azo, ou rhodamines, ou cyanines, ou polymethines, ou merocyanines, ou fluorescéines, ou pyrylium, ou phtalocyanines, ou pérylènes, ou benzanthrones, ou anthrapyrimidines, ou anthrapyridones, ou encore un colorant pourvu de complexes métalliques tels que des chélates ou des cryptates de terres rares ;
- le système optique de départ est réalisé dans d'autres matériaux tels que le polycarbonate, le polymethyl(meth)acylate, le polyamide ou des polymères thiouréthanes, allyl-carbonates, acryliques, urétanes et/ou épisulfides, ces matériaux étant bien connu de l'homme de l'art dans le domaine des lentilles ophtalmiques ;
- le système optique de départ peut comporter sur au moins une face un ou plusieurs traitements parmi un traitement anti-reflets, un traitement anti-salissure, un traitement anti-rayure, un traitement anti-chocs, un filtre polarisé ;
- le système optique de départ peut comporter un ou plusieurs traitement tels que ceux mentionnés ci-dessus sur les deux surfaces, voire le système optique de départ peut comprendre une couche d'accroche et/ou peut comprendre au moins une couche permettant de réaliser une adaptation d'impédance optique entre le système optique de départ et l'élément optique complémentaire lorsque ceux-ci ont des indices de réfraction différents ;
- les traitements mentionnés ci-dessus peuvent par exemple être réalisés par transfert ou par lamination, autrement dit par collage, d'un film fonctionnel ;
- le système optique de départ peut comporter un élément actif tel qu'un guide d'ondes ou un réseau de cellules comprenant un ou plusieurs matériaux ayant un indice ou une absorption variable en fonction d'un stimuli externe tels qu'une composition éléctrochromique ou des cristaux liquides ou qu'une composition photochromique ;
- lorsque le système optique de départ comporte des lentilles ophtalmiques déjà montées dans une monture, le procédé peut comporter une étape de démontage des lentilles ophtalmiques avant de les positionner dans la machine de fabrication additive ;
- le procédé comporte en outre une ou plusieurs autres étapes de fabrication, par exemple une étape de détourage et/ou une étape de marquage pour former des marques dites temporaires ;
- le procédé de fabrication additif comporte une étape supplémentaire d'irradiation thermique pour polymériser ou durcir toute la structure fabriquée de manière additive ;
- le procédé de fabrication comporte une étape où la prise en compte de la variation d'indice du matériau de l'élément optique complémentaire peut se faire sous la forme d'une boucle d'optimisation itérative selon des procédures d'optimisation connues ;
- le matériau de l'élément optique complémentaire comporte optionnellement un ou plusieurs colorants, et/ou des nanoparticules configurées pour modifier sa transmission optique et/ou son aspect, et/ou des nanoparticules ou additifs configurés pour modifier ses propriétés mécaniques ;
- la machine de fabrication additive n'est pas une machine d'impression tridimensionnelle mais plutôt une machine de stéréolithographie, (SLA pour « Stereolithography *Apparatus »* en anglais) ou une machine d'extrusion par fil thermoplastique, aussi appelée machine de dépôt à fil tendu (FDM pour « *Fused Deposition Modeling* » en anglais) ;
- au moins une unité de contrôle et de commande comporte un microcontrôleur en place du microprocesseur ;
- l'interface de communication client-serveur comporte des dispositifs configurés pour transférer la consigne de fabrication de l'élément optique complémentaire et/ou de la lentille ophtalmique déterminées par un programme d'ordinateur, lequel comporte des instructions configurées pour mettre en œuvre chacune des étapes du procédé de fabrication décrit ci-dessus lorsque ce programme d'ordinateur est exécuté dans au moins une unité de contrôle et de commande qui comporte des éléments systémiques configurés pour exécuter ledit programme d'ordinateur ;
- l'interface de communication permet la communication via d'autres moyens que le réseau internet, par exemple via un réseau intranet ou un réseau privé sécurisé ; et/ou
- l'interface de communication permet de transférer l'ensemble du programme d'ordinateur vers un système de traitement de données distant pour la mise en œuvre du procédé de fabrication dans un autre système de fabrication pourvu d'une machine de fabrication additive et optionnellement d'au moins une machine de détourage et/ou d'une ou plusieurs autres machines de traitement.

On rappelle plus généralement que l'invention ne se limite pas aux exemples décrits et représentés. L'invention telle que revendiquée est définie dans le jeu de revendications ci-dessous.

## Revendications

1. Procédé de fabrication d'au moins une lentille ophtalmique (12) présentant au moins une fonction optique, **caractérisé en ce qu'**il comporte :
- l'étape (200) de fournir un système optique de départ (20 ; 41) de ladite au moins une lentille ophtalmique (12), ledit système optique de départ (20 ; 41) ayant été fabriqué avec un contour adapté à une forme d'une monture prédéterminée et présentant une fonction optique de base apportée par une face avant (23 ; 46) et une face arrière (22 ; 45) dudit système optique de départ (20 ; 41) ; et
- l'étape (500) de fabriquer de manière additive un élément optique complémentaire (25 ; 30, 35 ; 47 ; 50) de ladite au moins une lentille ophtalmique (12), par le dépôt d'une pluralité d'éléments de volume prédéterminés d'au moins un matériau ayant un indice de réfraction prédéterminé, directement sur au moins l'une desdites face avant (23 ; 46) et face arrière (22 ; 45) dudit système optique de départ (20 ; 41) ;
avec ladite étape (500) de fabriquer de manière additive qui comporte l'étape (116) de déterminer une consigne de fabrication dudit élément optique complémentaire (25 ; 30, 35 ; 47 ; 50) à partir de caractéristiques de ladite au moins une fonction optique à fournir à ladite au moins une lentille ophtalmique (12), de caractéristiques de ladite au moins une fonction optique de base dudit système optique de départ (20 ; 41), de caractéristiques géométriques dudit système optique de départ (20 ; 41), et dudit indice de réfraction prédéterminé dudit au moins un matériau ; et avec l'élément optique complémentaire (25, 30, 35, 47 et 50) qui présente une géométrie qui est déterminée de sorte à être directement adaptée au contour de la monture dans laquelle la lentille ophtalmique (12) est configurée pour être montée.

2. Procédé selon la revendication 1, **caractérisé en ce que** ladite étape (500) de fabriquer de manière additive comporte l'étape (113) de déterminer des caractéristiques géométriques dudit élément optique complémentaire (25 ; 30, 35 ; 47 ; 50) et/ou de ladite au moins une lentille ophtalmique (12) à partir de caractéristiques d'au moins une fonction optique complémentaire à fournir audit élément optique complémentaire (25 ; 30, 35 ; 47 ; 50), desdites caractéristiques géométriques dudit système optique de départ (20 ; 41) et dudit indice de réfraction prédéterminé dudit au moins un matériau.

3. Procédé selon l'une des revendications 1 et 2, **caractérisé en ce que** ladite étape (500) de fabriquer de manière additive comporte l'étape (106) de déterminer au moins une fonction optique complémentaire à fournir audit élément optique complémentaire (25; 30, 35 ; 47; 50) à partir desdites caractéristiques de ladite au moins une fonction optique à fournir à ladite au moins une lentille ophtalmique (12) et desdites caractéristiques de ladite au moins une fonction optique de base dudit système optique de départ (20 ; 41).

4. Procédé selon l'une quelconque des revendications 1 à 3, **caractérisé en ce que** ladite étape (500) de fabriquer de manière additive comporte l'étape (102) de déterminer ladite au moins une fonction optique à apporter à ladite au moins une lentille ophtalmique (12) à partir de valeurs de prescription liées à un porteur de ladite au moins une lentille ophtalmique (12) et de données complémentaires de port de ladite monture prédéterminée et/ou de forme de ladite monture.

5. Procédé selon la revendication 4, **caractérisé en ce que** ladite au moins une fonction optique à apporter à ladite au moins une lentille ophtalmique (12) est déterminée en outre à partir de données complémentaires de port de ladite monture prédéterminée et/ou de personnalisation, lesquelles correspondent à des valeurs géométriques qui caractérisent la monture et le comportement visuel du porteur, dont une distance entre l'œil et la lentille ophtalmique et/ou une position du centre de rotation de l'œil, et/ou un coefficient œil-tête, et/ou un angle pantoscopique et/ou un galbe de la monture et/ou un contour de la monture.

6. Procédé selon l'une quelconque des revendications 1 à 5, **caractérisé en ce que** ladite étape (500) de fabriquer de manière additive comporte l'étape de mesurer (104) lesdites caractéristiques de ladite au moins une fonction optique de base dudit système optique de départ (20 ; 41) et/ou l'étape de mesurer (108) lesdites caractéristiques géométriques dudit système optique de départ (20 ; 41).

7. Procédé selon l'une quelconque des revendications 1 à 6, **caractérisé en ce que** ledit au moins un matériau dans lequel est fabriqué de manière additive ledit élément optique complémentaire (25 ; 30, 35 ; 47 ; 50) est différent du matériau constitutif dudit système optique de départ (20 ; 41).

8. Procédé selon l'une quelconque des revendications 1 à 7, **caractérisé en ce que** ledit système optique de départ est formé par un ensemble (40) comportant ladite monture (42, 43) et deux lentilles ophtalmiques initiales (41) montées sur la dite monture (42, 43), et ledit procédé comporte une étape de fabrication additive de deux dits éléments optiques complémentaires (25 ; 30, 35 ; 47 ; 50) respectivement sur lesdites lentilles ophtalmique initiales utilisées comme système optique de départ (41) pour former deux dites lentilles ophtalmiques, avec ladite consigne de fabrication qui est déterminée en outre à partir de caractéristiques liées à la vision binoculaire d'un porteur des deux dites lentilles ophtalmiques.

9. Procédé selon l'une quelconque des revendications 1 à 8, **caractérisé en ce que** ladite étape (500) de fabriquer de manière additive est réalisée par le dépôt d'une pluralité d'au moins un élément de volume prédéterminé dudit au moins un matériau sur au moins toute la surface utile de l'une au moins desdites face avant (23 ; 46) et face arrière (22 ; 45) dudit système optique de départ (20 ; 41).

10. Procédé selon l'une quelconque des revendications 1 à 9, **caractérisé en ce qu'**il comporte, avant ladite étape (500) de fabrication additive, l'étape (300) d'introduire et de positionner ledit système optique de départ (20 ; 41) sur un support de réception (10) dans une machine de fabrication additive (1).

11. Procédé selon la revendication 10, **caractérisé en ce qu'**il comporte, après ladite étape (300) de positionnement dudit système optique de départ (20 ; 41) et avant ladite étape (500) de fabrication additive, l'étape (400) de vérifier la position dudit système optique de départ (20 ; 41) dans ladite machine de fabrication additive (1) et l'étape de déclencher une action correctrice s'il existe un écart entre la position réelle dudit système optique de départ (20 ; 41) et une position prédéterminée.

12. Procédé selon l'une quelconque des revendications 1 à 11, **caractérisé en ce que**, après ladite étape (500) de fabrication additive, ledit élément optique complémentaire (25 ; 30, 35 ; 47 ; 50) présente un contour sensiblement égal à celui dudit système optique de départ (20 ; 41) et configuré pour être introduit dans ladite monture prédéterminée.

13. Procédé selon l'une quelconque des revendications 1 à 12, **caractérisé en ce que** ledit système optique de départ (41) correspond à un verre dit de présentation monté sur ladite monture prédéterminée dite monture de présentation, et ladite fonction optique de base est nulle.

14. Machine de fabrication additive configurée pour fabriquer une lentille ophtalmique (12) et comportant une unité de contrôle et de commande (2) pourvue d'éléments systémiques (3, 4, 5) configurés pour exécuter un programme d'ordinateur comportant des instructions configurées pour mettre en œuvre chacune des étapes du procédé selon l'une quelconque des revendications 1 à 13.

15. Machine selon la revendication 14, **caractérisé en ce qu'**elle comporte un support de réception (10) configuré pour recevoir ledit système optique de départ (20 ; 41), avec ledit support de réception (10) et/ou ledit système optique de départ (20 ; 41) qui sont configurés pour que ce dernier soit positionné dans une position prédéterminée par rapport à un repère de ladite machine (1) et/ou un système de détection, formé par exemple par un dispositif de lecture optique et/ou un dispositif de capture d'images, configuré pour détecter la position dudit système optique de départ (20 ; 41) sur ledit support de réception (10) et/ou par rapport à ladite position prédéterminée dans ledit repère de ladite machine (1).

## Patentansprüche

1. Verfahren zur Herstellung mindestens einer ophthalmischen Linse (12), die mindestens eine optische Funktion aufweist, **dadurch gekennzeichnet, dass** es umfasst:
- den Schritt (200) der Bereitstellung eines optischen Ausgangssystems (20; 41) der mindestens einen ophthalmischen Linse (12), wobei das optische Ausgangssystems (20; 41) mit einem Umriss hergestellt worden ist, der an eine Form eines vorbestimmten Gestells angepasst ist, und eine optische Basisfunktion aufweist, die von einer Vorderseite (23; 46) und einer Rückseite (22; 45) des optischen Ausgangssystems (20; 41) erbracht wird; und
- den Schritt (500) der additiven Fertigung eines komplementären optischen Elements (25; 30, 35; 47; 50) der mindestens einen ophthalmischen Linse (12) durch das Aufbringen einer Vielzahl von vorbestimmten Volumenelementen mindestens eines Werkstoffs, der einen vorbestimmten Brechungsindex hat, direkt auf die Vorderseite (23; 46) und/oder die Rückseite (22; 45) des optischen Ausgangssystems (20; 41);
wobei der Schritt (500) der additiven Fertigung den Schritt (116) der Bestimmung einer Fertigungsanweisung des komplementären optischen Elements (25; 30, 35; 47; 50) ausgehend von Merkmalen der mindestens einen für die mindestens eine ophthalmische Linse (12) bereitzustellenden optischen Funktion, von Merkmalen der mindestens einen optischen Basisfunktion des optischen Ausgangssystems (20; 41), von geometrischen Merkmalen des optischen Ausgangssystems (20; 41) und vom vorbestimmten Brechungsindex des mindestens einen Werkstoffs umfasst; und wobei das komplementäre optische Element (25, 30, 35, 47 und 50) eine Geometrie aufweist, die so bestimmt ist, dass sie direkt an den Umriss des Gestells angepasst ist, für das die ophthalmische Linse (12) ausgelegt ist, um in es montiert zu werden.

2. Verfahren nach Anspruch 1, **dadurch gekennzeichnet, dass** der Schritt (500) der additiven Fertigung den Schritt (113) der Bestimmung von geometrischen Merkmalen des komplementären optischen Elements (25; 30, 35; 47; 50) und/oder der mindestens einen ophthalmischen Linse (12) ausgehend von Merkmalen mindestens einer für das komplementäre optische Element (25; 30, 35; 47; 50) bereitzustellenden komplementären optischen Funktion, den geometrischen Merkmalen des optischen Ausgangssystems (20; 41) und dem vorbestimmten Brechungsindex des mindestens einen Werkstoffs umfasst.

3. Verfahren nach einem der Ansprüche 1 und 2, **dadurch gekennzeichnet, dass** der Schritt (500) der additiven Fertigung den Schritt (106) der Bestimmung mindestens einer für das komplementäre optische Element (25; 30, 35; 47; 50) bereitzustellenden komplementären optischen Funktion ausgehend von den Merkmalen der mindestens einen für die mindestens eine ophthalmische Linse (12) bereitzustellenden optischen Funktion und den Merkmalen der mindestens einen optischen Basisfunktion des optischen Ausgangssystems (20; 41) umfasst.

4. Verfahren nach einem der Ansprüche 1 bis 3, **dadurch gekennzeichnet, dass** der Schritt (500) der additiven Fertigung den Schritt (102) der Bestimmung der mindestens einen optischen Funktion, die der mindestens einen ophthalmischen Linse (12) zu verleihen ist, ausgehend von Verschreibungswerten, die mit einem Träger der mindestens einen ophthalmischen Linse (12) verbunden sind, und von komplementären Daten des Tragens des vorbestimmten Gestells und/oder der Form des Gestells umfasst.

5. Verfahren nach Anspruch 4, **dadurch gekennzeichnet, dass** die mindestens eine optische Funktion, die der mindestens einen ophthalmischen Linse (12) zu verleihen ist, außerdem ausgehend von komplementären Daten des Tragens des vorbestimmten Gestells und/oder der Personalisierung bestimmt wird, welche geometrischen Werten entsprechen, die das Gestell und das visuelle Verhalten des Trägers charakterisieren, darunter ein Abstand zwischen dem Auge und der ophthalmischen Linse und/oder eine Position des Rotationsmittelpunkts des Auges und/oder ein Auge-Kopf-Koeffizient und/oder ein pantoskopischer Winkel und/oder eine Wölbung des Gestells und/oder ein Umriss des Gestells.

6. Verfahren nach einem der Ansprüche 1 bis 5, **dadurch gekennzeichnet, dass** der Schritt (500) der additiven Fertigung den Schritt der Messung (104) der Merkmale der mindestens einen optischen Basisfunktion des optischen Ausgangssystems (20; 41) und/oder den Schritt der Messung (108) der geometrischen Merkmale des optischen Ausgangssystems (20; 41) umfasst.

7. Verfahren nach einem der Ansprüche 1 bis 6, **dadurch gekennzeichnet, dass** der mindestens eine Werkstoff, aus dem das komplementäre optische Element (25; 30, 35; 47; 50) additiv gefertigt wird, von dem Werkstoff, aus dem das optische Ausgangssystem (20; 41) besteht, verschieden ist.

8. Verfahren nach einem der Ansprüche 1 bis 7, **dadurch gekennzeichnet, dass** das optische Ausgangssystem von einer Einheit (40) gebildet wird, die das Gestell (42, 43) und zwei in das Gestell (42, 43) montierte ophthalmische Ausgangslinsen (41) umfasst, und das Verfahren einen Schritt der additiven Fertigung von zwei komplementären optischen Elementen (25; 30, 35; 47; 50) jeweils auf den ophthalmischen Ausgangslinsen umfasst, die als optisches Ausgangssystem (41) verwendet werden, um zwei ophthalmische Linsen zu bilden, wobei die Fertigungsanweisung außerdem ausgehend von Merkmalen bestimmt wird, die mit dem binokularen Sehen eines Trägers der zwei ophthalmischen Linsen zusammenhängen.

9. Verfahren nach einem der Ansprüche 1 bis 8, **dadurch gekennzeichnet, dass** der Schritt (500) der additiven Fertigung durch das Auftragen einer Vielzahl von mindestens einem vorbestimmten Volumenelement des mindestens einen Werkstoffs auf mindestens die gesamte Nutzfläche der Vorderseite (23; 46) und/oder Rückseite (22; 45) des optischen Ausgangssystems (20; 41) durchgeführt wird.

10. Verfahren nach einem der Ansprüche 1 bis 9, **dadurch gekennzeichnet, dass** es vor dem Schritt (500) der additiven Fertigung den Schritt (300) der Einführung und Positionierung des optischen Ausgangssystems (20; 41) auf einem Aufnahmeträger (10) in einer Maschine zur additiven Fertigung (1) umfasst.

11. Verfahren nach Anspruch 10, **dadurch gekennzeichnet, dass** es nach dem Schritt (300) der Positionierung des optischen Ausgangssystems (20; 41) und vor dem Schritt (500) der additiven Fertigung den Schritt (400) der Überprüfung der Position des optischen Ausgangssystems (20; 41) in der Maschine zur additiven Fertigung (1) und den Schritt der Auslösung eines Korrekturvorgangs, wenn eine Abweichung zwischen der tatsächlichen Position des optischen Ausgangssystems (20; 41) und einer vorbestimmten Position vorhanden ist, umfasst.

12. Verfahren nach einem der Ansprüche 1 bis 11, **dadurch gekennzeichnet, dass** nach dem Schritt (500) der additiven Fertigung das komplementäre optische Element (25; 30, 35; 47; 50) einen Umriss aufweist, der im Wesentlichen gleich demjenigen des optischen Ausgangssystems (20; 41) ist und dafür ausgelegt ist, in das vorbestimmte Gestell eingeführt zu werden.

13. Verfahren nach einem der Ansprüche 1 bis 12, **dadurch gekennzeichnet, dass** das optische Ausgangssystem (41) einem Präsentationsglas genannten Glas entspricht, das in das vorbestimmte Gestell, das Präsentationsgestell genannt wird, montiert wird, und die optische Basisfunktion nicht vorhanden ist.

14. Maschine zur additiven Fertigung, die dafür ausgelegt ist, eine ophthalmische Linse (12) zu fertigen, und eine Kontroll- und Steuereinheit (2) aufweist, die mit systemischen Elementen (3, 4, 5) versehen ist, die dafür ausgelegt sind, ein Computerprogramm auszuführen, das Anweisungen umfasst, die dafür ausgelegt sind, jeden der Schritte des Verfahren nach einem der Ansprüche 1 bis 13 durchzuführen.

15. Maschine nach Anspruch 14, **dadurch gekennzeichnet, dass** sie einen Aufnahmeträger (10) umfasst, der dafür ausgelegt ist, das das optische Ausgangssystem (20; 41) aufzunehmen, wobei der Aufnahmeträger (10) und/oder das optische Ausgangssystem (20; 41) dafür ausgelegt sind, dass dieses Letztere in einer vorbestimmten Position bezüglich eines Bezugssystems der Maschine (1) positioniert wird, und/oder ein Erfassungssystem, das zum Beispiel von einer optischen Lesevorrichtung und/oder einer Bilderfassungsvorrichtung gebildet wird und dafür ausgelegt ist, die Position des optischen Ausgangssystems (20; 41) auf dem Aufnahmeträger (10) und/oder bezüglich der vorbestimmten Position im Bezugssystem der Maschine (1) zu erfassen.

## Claims

1. Process for manufacturing at least one ophthalmic lens (12) having at least one optical function, **characterized in that** it comprises:
- the step (200) of providing a starting optical system (20; 41) of said at least one ophthalmic lens (12), said starting optical system (20; 41) having been manufactured with an outline adapted to a shape of a predetermined frame and having a base optical function delivered by a front face (23; 46) and a back face (22; 45) of said starting optical system (20; 41); and
- the step (500) of additively manufacturing an optical element (25; 30, 35; 47; 50) which is complementary to said at least one ophthalmic lens (12), by depositing a plurality of predetermined volume elements of at least one material having a predetermined refractive index, directly on at least one of said front face (23; 46) and back face (22; 45) of said starting optical system (20; 41);
with said additive manufacturing step (500) which comprises the step (116) of determining manufacturing settings for said complementary optical element (25; 30, 35; 47; 50) from characteristics of said at least one optical function to be provided to said at least one ophthalmic lens (12), from characteristics of said at least one base optical function of said starting optical system (20; 41), from geometric characteristics of said starting optical system (20; 41) and from said predetermined refractive index of said at least one material; and with the complementary optical element (25, 30, 35, 47 and 50) which has a geometry which is determined so as to be directly adapted to the outline of the frame in which the ophthalmic lens (12) is configured to be fitted.

2. Process according to Claim 1, **characterized in that** said additive manufacturing step (500) comprises the step (113) of determining geometric characteristics of said complementary optical element (25; 30, 35; 47; 50) and/or of said at least one ophthalmic lens (12) from characteristics of at least one complementary optical function to be provided to said complementary optical element (25; 30, 35; 47; 50), from said geometric characteristics of said starting optical system (20; 41) and from said predetermined refractive index of said at least one material.

3. Process according to one of Claims 1 and 2, **characterized in that** said additive manufacturing step (500) comprises the step (106) of determining at least one complementary optical function to be provided to said complementary optical element (25; 30, 35; 47; 50) from said characteristics of said at least one optical function to be provided to said at least one ophthalmic lens (12) and from said characteristics of said at least one base optical function of said starting optical system (20; 41).

4. Process according to any one of Claims 1 to 3, **characterized in that** said additive manufacturing step (500) comprises the step (102) of determining said at least one optical function to be delivered to said at least one ophthalmic lens (12) from prescription values associated with a wearer of said at least one ophthalmic lens (12) and from complementary fitting data of said predetermined frame and/or shape data of said frame.

5. Process according to Claim 4, **characterized in that** said at least one optical function to be delivered to said at least one ophthalmic lens (12) is furthermore determined from complementary fitting data of said predetermined frame and/or personalization data, which correspond to geometric values which characterize the frame and the visual behaviour of the wearer, including a distance between the eye and the ophthalmic lens and/or a position of the centre of rotation of the eye and/or an eye-head coefficient and/or a pantoscopic angle and/or a curve of the frame and/or an outline of the frame.

6. Process according to any one of Claims 1 to 5, **characterized in that** said additive manufacturing step (500) comprises the step (104) of measuring said characteristics of said at least one base optical function of said starting optical system (20; 41) and/or the step (108) of measuring said geometric characteristics of said starting optical system (20; 41).

7. Process according to any one of Claims 1 to 6, **characterized in that** said at least one material from which said complementary optical element (25; 30, 35; 47; 50) is additively manufactured is different from the constituent material of said starting optical system (20; 41).

8. Process according to any one of Claims 1 to 7, **characterized in that** said starting optical system is formed by an assembly (40) comprising said frame (42, 43) and two initial ophthalmic lenses (41) fitted in said frame (42, 43), and said process comprises a step of additively manufacturing two said complementary optical elements (25; 30, 35; 47; 50), one on each of said initial ophthalmic lenses used as starting optical system (41), in order to form two said ophthalmic lenses, with said manufacturing settings which are furthermore determined from characteristics related to the binocular vision of a wearer of said two ophthalmic lenses.

9. Process according to any one of Claims 1 to 8, **characterized in that** said additive manufacturing step (500) is carried out by depositing a plurality of at least one predetermined volume element of said at least one material on at least all the work area of at least one of said front face (23; 46) and back face (22; 45) of said starting optical system (20; 41).

10. Process according to any one of Claims 1 to 9, **characterized in that** it comprises, before said additive manufacturing step (500), the step (300) of placing and positioning said starting optical system (20; 41) on a receiving holder (10) in an additive manufacturing machine (1).

11. Process according to Claim 10, **characterized in that** it comprises, after said step (300) of positioning said starting optical system (20; 41) and before said additive manufacturing step (500), the step (400) of checking the position of said starting optical system (20; 41) in said additive manufacturing machine (1) and the step of triggering a corrective action if there is a discrepancy between the actual position of said starting optical system (20; 41) and a predetermined position.

12. Process according to any one of Claims 1 to 11, **characterized in that**, after said additive manufacturing step (500), said complementary optical element (25; 30, 35; 47; 50) has an outline substantially equal to that of said starting optical system (20; 41) and configured to be inserted into said predetermined frame.

13. Process according to any one of Claims 1 to 12, **characterized in that** said starting optical system (41) corresponds to a lens referred to as a demonstration lens fitted in said predetermined frame referred to as a demonstration frame, and said base optical function is zero.

14. Additive manufacturing machine configured to manufacture an ophthalmic lens (12) and comprising a command/control unit (2) provided with system elements (3, 4, 5) configured to run a computer program comprising instructions configured to implement each of the steps of the process according to any one of Claims 1 to 13.

15. Machine according to Claim 14, **characterized in that** it comprises a receiving holder (10) configured to receive said starting optical system (20; 41), with said receiving holder (10) and/or said starting optical system (20; 41) which are configured so that the latter is positioned in a predetermined position relative to a coordinate system of said machine (1) and/or a detecting system, for example formed by an optical reading device and/or an image-capturing device, configured to detect the position of said starting optical system (20; 41) on said receiving holder (10) and/or relative to said predetermined position in said coordinate system of said machine (1).
